# EUROPÄISCHE PATENTANMELDUNG

(11) **EP 4 203 217 A1**
(43) Veröffentlichungstag der Anmeldung: **28.06.2023**
(21) Anmeldenummer: 22214611.0
(22) Anmeldetag: 19.12.2022
(51) Int. Cl.: H02G 15/013, H02G 15/007

(54) **OBJEKTMUFFENVORRICHTUNG, OBJEKTMUFFE, VERFAHREN ZUR MONTAGE EINER OBJEKTMUFFENVORRICHTUNG**

(30) Priorität: 22.12.2021 DE 102021134332
(71) Anmelder: Reichle & De-Massari AG, 8620 Wetzikon (CH)
(72) Erfinder: Zurkirchen, Marco, 8608 Bubikon (CH)
(74) Vertreter: Daub, Thomas

(57) **Zusammenfassung**

Die Erfindung geht aus von einer Objektmuffenvorrichtung (12) mit zumindest einer Zugentlastungseinheit (14), insbesondere zumindest einer Loop-Zugentlastungseinheit, welche zumindest einen Fixierbereich (16) für zumindest ein längliches Objekt (18), insbesondere ein Kabel, aufweist, und mit zumindest einer Basiseinheit (20).

Um eine gattungsgemäße Vorrichtung mit verbesserten Eigenschaften hinsichtlich einer Effizienz, und zwar bezüglich einer Montage und/oder Demontage und/oder Abdichtung und/oder Zugentlastung und/oder Fixierung bereitzustellen, wird vorgeschlagen, dass zu einer Vormontage des länglichen Objekts (18) mit der Zugentlastungseinheit (14), die Zugentlastungseinheit (14) und die Basiseinheit (20) zumindest teilweise trennbar voneinander ausgebildet sind.

## Beschreibung

### Stand der Technik

Die Erfindung betrifft eine Objektmuffenvorrichtung nach dem Oberbegriff des Anspruchs 1, eine Objektmuffe nach Anspruch 14 und ein Verfahren zur Montage einer Objektmuffenvorrichtung nach Anspruch 15.

Aus dem Stand der Technik sind bereits Kabelmuffenvorrichtungen mit Zugentlastungseinheiten für zumindest ein längliches Objekt, insbesondere ein Kabel, bekannt.

Die Aufgabe der Erfindung besteht insbesondere darin, eine gattungsgemäße Vorrichtung mit verbesserten Eigenschaften hinsichtlich einer Effizienz, und zwar bezüglich einer Montage- und/oder Demontage und/oder Abdichtung und/oder Zugentlastung und/oder Fixierung bereitzustellen. Die Aufgabe wird erfindungsgemäß durch die Merkmale der Ansprüche 1, 14 und 15 gelöst, während vorteilhafte Ausgestaltungen und Weiterbildungen der Erfindung den Unteransprüchen entnommen werden können.

### Vorteile der Erfindung

Die Erfindung geht aus von einer Objektmuffenvorrichtung, insbesondere einer Kabelmuffenvorrichtung, mit zumindest einer Zugentlastungseinheit, insbesondere zumindest einer Loop-Zugentlastungseinheit, welche zumindest einen Fixierbereich für zumindest ein Kabel aufweist, und mit zumindest einer Basiseinheit.

Es wird vorgeschlagen, dass zu einer Vormontage eines länglichen Objekts, insbesondere eines Kabels, mit der Zugentlastungseinheit, die Zugentlastungseinheit und die Basiseinheit zumindest teilweise trennbar voneinander ausgebildet sind.

Durch eine derartige Ausgestaltung kann eine Effizienz, hinsichtlich einer Montage und/oder Demontage und/oder Abdichtung und/oder Zugentlastung und/oder Fixierung zumindest eines länglichen Objekts gesteigert werden. Zudem kann eine Objektmuffenvorrichtung mit verbesserten Eigenschaften hinsichtlich einer Abfangung des länglichen Objekts, vorteilhaft einer Kabelabfangung, insbesondere im Falle von Kabeln mit unterschiedlichen Durchmessern, bereitgestellt werden. Damit kann zumindest das längliche Objekt, insbesondere das Kabel, vorteilhaft unabhängig von seinem Durchmesser in zumindest einem Fixierbereich fixiert und/oder zugentlastet werden. Darüber hinaus kann aufgrund einer Zugentlastungseinheit und einer Basiseinheit, welche zumindest teilweise trennbar voneinander ausgebildet sind, eine komfortablere Montage und/oder Demontage zumindest des länglichen Objekts mit und/oder von der Zugentlastungseinheit ermöglicht und damit wiederum ein Montage- und/oder Demontageaufwand reduziert werden. Ferner kann eine Sicherheit erhöht und eine Zerstörung des länglichen Objekts, beispielsweise durch ein Abknicken und/oder Verbiegen, verhindert werden.

Unter einer Objektmuffenvorrichtung soll vorliegend eine Vorrichtung verstanden werden, welche dazu vorgesehen ist, eine Isolations- und/oder eine Schutzwirkung für zumindest das längliche Objekt, insbesondere das Kabel, bereitzustellen und in ungeschützten Umgebungen, insbesondere im Freien, im Boden, in Montageschächten, an Kabelmasten, und/oder vergleichbaren Orten eingesetzt zu werden. Besonders bevorzugt ist die Objektmuffenvorrichtung als Kabelmuffenvorrichtung ausgebildet. Vorteilhaft schützt die Objektmuffenvorrichtung zumindest vor Feuchtigkeit, beispielsweise bei einem Volllaufen eines Kabel- und/oder Montageschachts. Die Objektmuffenvorrichtung kann zu einer Durchführung, Aufnahme, Dichtung, Zugentlastung und/oder Fixierung zumindest des länglichen Objekts vorgesehen sein. Bevorzugt umschließt die Objektmuffenvorrichtung zumindest abschnittsweise zumindest das längliche Objekt vollständig in einer Umfangsrichtung.

Insbesondere ist die Objektmuffenvorrichtung Teil einer Objektmuffe. Besonders bevorzugt ist die Objektmuffe als eine Kabelmuffe ausgebildet. Die Objektmuffenvorrichtung kann eine Unterbaugruppe der Objektmuffe ausbilden. Denkbar wäre auch, dass die Objektmuffenvorrichtung die gesamte Objektmuffe ausbildet. Bevorzugt sind die Objektmuffenvorrichtung und/oder die Objektmuffe Teil einer Loop-Baugruppe oder bildet/bilden diese aus. Die Objektmuffe kann eine Gehäuseeinheit aufweisen. In zumindest einem montierten Zustand könnte ein Dichtblock der Objektmuffe mit der Gehäuseeinheit verbunden, beispielsweise verschraubt sein, wobei auch andere Arten einer Fixierung an der Gehäuseeinheit denkbar sind. Vorteilhaft dichtet der Dichtblock die Gehäuseeinheit zumindest nach außen hin ab. Der Dichtblock könnte zumindest teilweise, vorteilhaft wenigstens zu einem Großteil, aus einem Mineral und/oder bevorzugt aus einem Kunststoff, beispielsweise Hartplastik, und/oder einem Verbundmaterial bestehen. Alternativ kann der Dichtblock auch aus anderen wetterbeständigen Materialien bestehen. Unter dem Ausdruck "zu einem Großteil" sollen vorliegend beispielsweise zumindest 55%, vorteilhaft zumindest 65%, vorzugsweise zumindest 75%, besonders bevorzugt zumindest 85% und besonders vorteilhaft höchstens 95% eines Volumen- und/oder Massenanteils verstanden werden. Insbesondere ist die Loopaufnahme zur Aufnahme der Objektmuffenvorrichtung vorgesehen. Unter einem "Dichtblock" soll vorliegend eine Einheit verstanden werden, welche dazu vorgesehen ist, zumindest teilweise die Objektmuffenvorrichtung und vorzugsweise zumindest ein weiteres längliches Objekt, insbesondere zumindest ein weiteres Kabel, aufzunehmen und in zumindest dem montierten Zustand mit der Gehäuseeinheit zumindest die Gehäuseeinheit abzudichten. Vorzugsweise ist der Dichtblock dazu vorgesehen, zumindest eine Öffnung einer Gehäuseeinheit abzudichten.

Der Dichtblock kann eine Objektaufnahme zur Aufnahme von länglichen Objekten, vorteilhaft Kabeln, aufweisen. Möglicherweise umfasst die Objektaufnahme zumindest im Wesentlichen runde Aussparungen, und zwar zumindest eine zumindest im Wesentlichen runde Aussparung, durch welche längliche Objekte, insbesondere Kabel, hindurchführbar und/oder einsetzbar sind. Insbesondere ist der Dichtblock zur Aufnahme der Objektmuffenvorrichtung vorgesehen. Bevorzugt weist der Dichtblock eine Loopaufnahme auf. Die Ausgestaltung und Formgebung der Loopaufnahme kann an eine Form und/oder Größe der Objektmuffenvorrichtung angepasst sein. Vorzugsweise handelt es sich bei der Loopaufnahme um eine zumindest im Wesentlichen ovale Aussparung. Unter "zumindest im Wesentlichen" soll in diesem Dokument verstanden werden, dass eine Abweichung von einem vorgegebenen Wert und/oder einer Formgebung weniger als 25 %, vorzugsweise weniger als 10 % und besonders bevorzugt weniger als 5 % des vorgegebenen Werts und/oder der Formgebung beträgt.

Unter einem "länglichen Objekt" soll ein Objekt verstanden werden, welches zumindest eine Haupterstreckung entlang einer Haupterstreckungsrichtung aufweist, welche zumindest doppelt, vorteilhaft zumindest viermal und vorzugsweise zumindest achtmal so groß ist, wie ein Durchmesser des länglichen Objekts, welcher insbesondere quer zur Haupterstreckungsrichtung gemessen ist. Unter einer "Haupterstreckungsrichtung" eines Objekts soll dabei eine Richtung verstanden werden, welche parallel zu einer längsten Kante eines kleinsten gedachten Quaders verläuft, welcher das Objekt gerade noch umschließt. Mögliche Ausgestaltungen des länglichen Objekts sind beispielsweise ein Rohr, vorteilhaft ein Einblasrohr, und/oder das Kabel und/oder ein Blindstopfen und/oder ein optisches längliches Objekt, vorteilhaft ein Glasfaserlängliches Objekt, welches zumindest ein Lichtwellenleiter aufweist. Bei dem Kabel kann es sich um einen elektrischen Leiter und/oder vorzugsweise um ein optisches Kabel, besonders bevorzugt um ein Glasfaserkabel handeln, welches zumindest einen Lichtwellenleiter aufweist. Der Lichtwellenleiter kann zumindest teilweise und vorteilhaft wenigstens zu einem Großteil aus einem Mineral, beispielsweise Quarzglas, oder/oder Kunststoff (polymere optische Faser, POF) und/oder einem Verbundmaterial ausbildet sein. Das Kabel kann einen Leiter oder mehrere Leiter, und zwar zumindest zwei Leiter umfassen. Zumindest der Leiter kann hierbei auch als eine Faser verstanden werden, unabhängig davon, ob es sich um einen optischen und/oder elektrischen Leiter handelt. Bevorzugt weist das Kabel zumindest einen Mantel zum Schutz und/oder zur Isolierung zumindest des Leiters auf. Denkbar wäre auch, dass wenn das Kabel zumindest die zwei Leiter aufweist, jeder Leiter eine eigene zusätzliche Isolierschicht und/oder Ummantelung aufweist. Bei dem Leiter kann es sich beispielsweise um eine einzelne Faser oder um ein Bündel von Fasern handeln. Besonders bevorzugt weist das längliche Objekt, insbesondere das Kabel, zumindest ein Zentralstützelement auf. Insbesondere zumindest der Leiter ist um das Zentralstützelement herum angeordnet.

Die Zugentlastungseinheit, insbesondere die Loop-Zugentlastungseinheit, soll als eine Einheit verstanden werden, welche dazu vorgesehen ist, zumindest das längliche Objekt in zumindest einer Richtung in zumindest dem Fixierbereich zu fixieren. In zumindest einem montierten Zustand kann das längliche Objekt in dem Fixierbereich fixiert sein. Bevorzugt ist das längliche Objekt zumindest abschnittsweise in dem Fixierbereich vollständig in Umfangsrichtung fixiert. Vorteilhaft ist der Fixierbereich ein räumlicher Bereich, in welchem eine Fixierung zumindest des länglichen Objekts in der Vormontage stattfindet. In der Vormontage kann das längliche Objekt in dem Fixierbereich zu einer Weiterbenutzung/Weiterbearbeitung fixiert werden. Beispielsweise könnte das längliche Objekt zuerst in dem Fixierbereich fixiert und danach zumindest teilweise entmantelt werden. Bevorzugt erfolgt die Abmantelung zumindest teilweise vor der Fixierung des länglichen Objekts in zumindest dem Fixierbereich zur zumindest teilweisen Freilegung zumindest des Leiters und/oder zumindest des Zentralstützelement. Die Zugentlastungseinheit könnte zumindest einen weiteren Fixierbereich aufweisen. Der weitere Fixierbereich könnte dazu vorgesehen sein, das Zentralstützelement zu fixieren. Umfasst das längliche Objekt, insbesondere das Kabel, mehrere Leiter, und zwar zumindest die zwei Leiter, könnten die Leiter nach zumindest teilweiser Abmantelung des länglichen Objekts, insbesondere des Kabels, bei Vormontage voneinander separiert und zumindest das Zentralstützelement in dem weiteren Fixierbereich fixiert werden. Insbesondere nach Abschluss der Vormontage ist in zumindest dem montierten Zustand das längliche Objekt in dem Fixierbereich und zumindest das Zentralstützelement in dem weiteren Fixierbereich fixiert.

Insbesondere beschreibt die Vormontage einen Prozess hinsichtlich der Fixierung zumindest des länglichen Objekts an der Zugentlastungseinheit, welcher vor einer Montage der Objektmuffenvorrichtung in der Loopaufnahme erfolgt. Ein Verfahren zur Montage der Objektmuffenvorrichtung könnte mehrere Verfahrensschritte, insbesondere Montageschritte, und/oder Verfahrensteilschritte umfassen. Bevorzugt ist die Vormontage Teil eines ersten Montageschritts des Verfahrens zur Montage der Objektmuffenvorrichtung.

Die Zugentlastungseinheit und die Basiseinheit könnten zumindest teilweise voneinander untrennbar ausgebildet sein. Denkbar wäre, dass die Zugentlastungseinheit nur soweit von der Basiseinheit trennbar ist, dass zumindest das längliche Objekt in dem Fixierbereich und/oder das Zentralstützelement in dem weiteren Fixierbereich fixierbar ist. Beispielsweise könnten die Zugentlastungseinheit und die Basiseinheit mittels eines Scharniers und/oder einer Steckverbindung dauerhaft zumindest teilweise miteinander verbunden sein. Möglicherweise könnte die Zugentlastungseinheit zur Vormontage des länglichen Objekts zumindest teilweise von der Basiseinheit heraus und/oder wegschwenkbar sein. Die Basiseinheit und die Zugentlastungseinheit könnten unverlierbar miteinander verbunden sein.

Die Basiseinheit kann zumindest ein Basiselement aufweisen. Vorteilhaft weist die Basiseinheit ein erstes Basiselement und zumindest ein zweites Basiselement auf. Die Zugentlastungseinheit kann zumindest teilweise trennbar von zumindest dem ersten Basiselement ausgebildet sein.

Unter "vorgesehen" soll hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt. Ferner dienen im vorliegenden Dokument Zahlwörter, wie beispielsweise "erste/r/s" und "zweite/r/s", welche bestimmten Begriffen vorangestellt sind, lediglich zu einer Unterscheidung von Verfahrensschritten und/oder Objekten und/oder einer Zuordnung zwischen Objekten untereinander und implizieren keine vorhandene Gesamtanzahl und/oder Rangfolge der Objekte und/oder der Verfahrensschritte. Insbesondere impliziert ein "zweites" Objekt und/oder Verfahrensschritt nicht zwangsläufig ein Vorhandensein eines "ersten" Objekts und/oder Verfahrensschritts.

Um einen Komfort und eine Effizienz, und zwar gerade eine Montage- und/oder Demontageeffizienz zu steigern, wird vorgeschlagen, dass die Zugentlastungseinheit und die Basiseinheit vollständig voneinander trennbar ausgebildet sind. Dadurch kann ein längliches Objekt, insbesondere ein Kabel, auf unkomplizierte Weise in zumindest einem Fixierbereich einer Zugentlastungseinheit fixiert werden. Die Zugentlastungseinheit kann von der Basiseinheit, insbesondere dem ersten Basiselement, abnehmbar sein. Insbesondere ist die Zugentlastungseinheit reversibel mit der Basiseinheit verbindbar und/oder von der Basiseinheit lösbar. Vorteilhaft ist die Zugentlastungseinheit zerstörungsfrei von der Basiseinheit lösbar. Besonders bevorzugt sind die Zugentlastungseinheit und die Basiseinheit wiederholbar vollständig voneinander trennbar und wieder miteinander verbindbar, und zwar vorzugsweise ohne, dass dadurch die Zugentlastungseinheit und/oder die Basiseinheit mechanisch beschädigbar und/oder zerstörbar ist. In zumindest dem ersten Montageschritt kann die Zugentlastungseinheit zur Vormontage des länglichen Objekts vollständig von der Basiseinheit getrennt werden.

Die Zugentlastungseinheit und die Basiseinheit könnten mittels einer Form- und/oder Kraftschlussverbindung, beispielsweise einer Steck- und/oder Schraub- und/oder Magnet- und/oder Rastverbindung, miteinander verbunden sein. Um eine besonders flexible und komfortable Konstruktion bereitzustellen, sowie eine Effizienz zu steigern, und zwar einen Montage- und/oder Demontageaufwand zu reduzieren, wird vorgeschlagen, dass die Objektmuffenvorrichtung eine Schieneneinheit aufweist, mittels welcher die Zugentlastungseinheit und die Basiseinheit in zumindest einem Montagezustand beweglich miteinander verbunden sind. Zudem kann mittels der Schieneneinheit eine Fixierung eines länglichen Objekts verbessert, und zwar aufgrund der flexiblen Konstruktion eine optimale Positionierung einer Zugentlastungseinheit auf einer Basiseinheit gerade unter Berücksichtigung eines Durchmessers des länglichen Objekts, insbesondere des Kabels, bereitgestellt/ermöglicht werden.

Vorzugsweise ist die Zugentlastungseinheit als eine Schlitteneinheit ausgebildet. Die Zugentlastungseinheit kann mittels der Schieneneinheit von der Basiseinheit zumindest teilweise und bevorzugt vollständig herunterschiebbar und/oder auf die Basiseinheit draufschiebbar sein. Die Zugentlastungseinheit kann mittels der Schieneneinheit in zumindest dem Montagezustand auf der Basiseinheit schiebbar gelagert sein. Insbesondere ist die Zugentlastungseinheit in zumindest dem Montagezustand beweglich mit dem ersten Basiselement verbunden. Bevorzugt ist die Zugentlastungseinheit in zumindest dem Montagezustand horizontal auf der Basiseinheit, insbesondere dem ersten Basiselement, verschiebbar. Zur Fixierung des länglichen Objekts kann in Abhängigkeit von einem Durchmesser des länglichen Objekts die Zugentlastungseinheit mittels der Schieneneinheit auf der Basiseinheit flexibel positionierbar sein, und zwar vorzugsweise derart, dass das längliche Objekt optimal fixiert werden kann. Aufgrund der Schieneneinheit kann die Zugentlastungseinheit in Abhängigkeit des Durchmessers des länglichen Objekts mit der Basiseinheit verbunden sein.

Unter dem Montagezustand soll im Gegensatz zu einem Zustand, welcher bereits ab Werk vorliegt, ein Zustand verstanden werden, welcher nach einer Nutzermontage vorliegt. Vorliegend ist der Montagezustand ein Zustand, in welchem die Zugentlastungseinheit mit der Basiseinheit verbunden, und zwar beweglich verbunden ist. Insbesondere ist der Montagezustand ein montierter Zustand der Zugentlastungseinheit auf/mit der Basiseinheit, insbesondere dem ersten Basiselement. Bei dem Verfahren zur Montage der Objektmuffenvorrichtung kann die Zugentlastungseinheit mit der Basiseinheit verbunden werden. Bevorzugt wird in einem zweiten Montageschritt des Verfahrens die Zugentlastungseinheit mittels der Schieneneinheit auf die Basiseinheit geschoben.

Ferner wird vorgeschlagen, dass die Schieneneinheit zumindest teilweise einstückig, vorteilhaft einteilig, mit der Basiseinheit und/oder der Zugentlastungseinheit ausgebildet ist. Damit kann eine kompakte und/oder einfache Konstruktion bereitgestellt sowie eine Effizienz, beispielsweise hinsichtlich einer Produkt- und/oder Arbeits- und/oder Montage- und/oder Demontage- und/oder Herstellungs- und/oder Kosteneffizienz, weiter gesteigert werden. Zudem kann auf zusätzliche Einheiten und/oder Fixierungen zur Verbindung einer Zugentlastungseinheit mit der Basiseinheit verzichtet werden.

Die Basiseinheit und/oder der Zugentlastungseinheit kann/können jeweils zumindest ein Element aufweisen, welches Teil der Schieneneinheit ist/sind und zur beweglichen und insbesondere zumindest teilweise trennbaren Verbindung der Basiseinheit und der Zugentlastungseinheit beitragen. Bevorzugt weist die Zugentlastungseinheit zumindest einen Führungskanal auf. Die Basiseinheit kann zumindest einen Führungssteg aufweisen, welcher mit zumindest dem Führungskanal korrespondierend ausgebildet ist. Bevorzugt ist der Führungssteg Teil des ersten Basiselements und zumindest teilweise, vorteilhaft vollständig, einstückig, bevorzugt einteilig, mit dem ersten Basiselement ausgebildet. Denkbar wäre auch, dass die Zugentlastungseinheit zumindest den Führungssteg und die Basiseinheit zumindest den korrespondierenden Führungskanal aufweist. Insbesondere ist der zu dem Führungskanal korrespondierende Führungssteg dazu vorgesehen, in dem Führungskanal angeordnet zu sein und/oder entlang des Führungskanals entlangzugleiten. Der Führungssteg kann bei Montage der Zugentlastungseinheit mit der Basiseinheit in den Führungskanal einsetzbar sein. Bei dem Verfahren zur Montage der Objektmuffenvorrichtung kann die Zugentlastungseinheit mit der Basiseinheit aufgrund eines Ineinandergreifens des Führungsstegs in den Führungskanal verbunden werden. In dem zweiten Montageschritt kann der Führungssteg in den Führungskanal eingeführt werden.

Die Schieneneinheit könnte eine außenliegende Führung zur Führung der Zugentlastungseinheit entlang der Basiseinheit umfassen. Zumindest der Führungskanal der Zugentlastungseinheit könnte außenliegend an zumindest einer Außenseite eines Grundelements der Zugentlastungseinheit angeordnet sein. Zumindest der Führungssteg kann bei Montage der Zugentlastungseinheit auf der Basiseinheit des außenliegenden Führungskanals entlanggleitbar und/oder führbar sein. Bevorzugt ist die Schieneneinheit als eine T-Führungs-Schieneneinheit ausgebildet. Insbesondere ist der Führungskanal an einer Unterseite des Grundelements angeordnet. Die Zugentlastungseinheit kann bei Montage mittels des Führungskanals auf den Führungssteg der Basiseinheit horizontal schiebbar sein. In zumindest dem Montagezustand ist die Zugentlastungseinheit entlang des Führungsstegs beweglich mit der Basiseinheit verbunden. Die Schieneneinheit kann zumindest ein Stoppelement aufweisen. Das Stoppelement kann eine Stoppfunktion für die Zugentlastungseinheit bereitstellen. Vorteilhaft ist das Stoppelement zumindest teilweise einstückig, vorteilhaft einteilig, mit dem Grundelement ausgebildet. Die Zugentlastungseinheit kann insbesondere horizontal auf dem Führungssteg verschiebbar sein. Die Zugentlastungseinheit kann soweit auf die Basiseinheit schiebbar sein, bis der Führungssteg an dem Stoppelement ansteht und/oder anschlägt, und damit insbesondere ein Weiterschieben der Zugentlastungseinheit auf die Basiseinheit verhindert ist.

Besonders bevorzugt ist zumindest die Basiseinheit bezüglich zumindest des ersten Basiselements zumindest im Wesentlichen spiegelsymmetrisch aufgebaut. Darunter, dass ein Objekt "zumindest im Wesentlichen spiegelsymmetrisch" ist, soll vorliegend verstanden werden, dass das Objekt eine Abweichung von höchstens 20 %, vorteilhaft höchstens 15 %, bevorzugt höchstens 10 % und besonders bevorzugt höchstens 5 % bezüglich einer Formgebung zumindest eines idealen, spiegelsymmetrischen Körpers aufweist.

Die Objektmuffenvorrichtung könnte zumindest eine weitere Zugentlastungseinheit aufweisen. Die weitere Zugentlastungseinheit könnte unbeweglich und/oder unverschiebbar und/oder untrennbar mit der Basiseinheit, insbesondere dem ersten Basiselement, verbunden und/oder ausgebildet sein. Vorteilhaft ist die weitere Zugentlastungseinheit identisch zu der Zugentlastungseinheit ausgebildet. Bevorzugt ist die weitere Zugentlastungseinheit ebenfalls beweglich mit der Basiseinheit verbunden und zumindest teilweise und besonders bevorzugt vollständig von der Basiseinheit trennbar ausgebildet. Die Zugentlastungseinheit und die weitere Zugentlastungseinheit könnten bei dem Verfahren zur Montage nacheinander mit der Basiseinheit verbunden werden. Die Zugentlastungseinheit und die weitere Zugentlastungseinheit können jeweils in dem zweiten Montageschritt, insbesondere nach Fixierung des länglichen Objekts mit der Zugentlastungseinheit und/oder der weiteren Zugentlastungseinheit, mit der Basiseinheit verbunden, und zwar auf die Basiseinheit aufgeschoben werden. Das Stoppelement kann eine Stoppfunktion für die Zugentlastungseinheit und die weitere Zugentlastungseinheit bereitstellen. Besonders bevorzugt ist das Stoppelement zentral entlang einer Breitenerstreckung der Basiseinheit, insbesondere des ersten Basiselements, angeordnet. Vorteilhaft ist das Stoppelement zumindest teilweise einstückig, vorteilhaft einteilig, mit zumindest einem weiteren Führungssteg der Basiseinheit, insbesondere des ersten Basiselements, zur beweglichen Verbindung mit der weiteren Zugentlastungseinheit ausgebildet. Die weitere Zugentlastungseinheit kann insbesondere horizontal bis zu dem Stoppelement auf der Basiseinheit verschiebbar sein. In dem zweiten Montageschritt könnten die Zugentlastungseinheit und die weitere Zugentlastungseinheit jeweils soweit auf die Basiseinheit geschoben werden, bis diese sich zumindest teilweise berühren. In zumindest dem Montagezustand können die Zugentlastungseinheit und die weitere Zugentlastungseinheit zumindest teilweise kontaktbündig aneinander anliegen.

Die Basiseinheit und/oder die Zugentlastungseinheit und/oder die Schieneneinheit könnten zumindest teilweise, vorteilhaft wenigstens zu einem Großteil aus einem Mineral und/oder einem Metall und/oder bevorzugt einem Kunststoff und/oder einem Verbundmaterial hergestellt sein. Unter "einstückig" soll zumindest stoffschlüssig verbunden verstanden werden, beispielsweise durch einen Klebeprozess, einen Anspritzprozess und/oder Schweißprozess und/oder einen anderen, einem Fachmann als sinnvoll erscheinenden Prozess. Unter "einteilig" soll in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, und/oder in einem Stanzverfahren aus dem einzelnen Rohling hergestellt. Denkbar wäre auch, dass die Schieneneinheit zumindest teilweise einteilig mit der Basiseinheit und/oder der Zugentlastungseinheit mittels eines 3D-Druckverfahrens hergestellt ist.

Zur Fixierung zumindest des länglichen Objekts in dem Fixierbereich kann die Zugentlastungseinheit mehrere Elemente und/oder Einheiten umfassen. Die Zugentlastungseinheit kann ein Spannband aufweisen. Das Spannband kann den Fixierbereich zumindest teilweise definieren. Bevorzugt ist das Spannband an dem Grundelement angeordnet und definiert mit dem Grundelement gemeinsam den Fixierbereich. Beispielsweise könnte das Spannband mit dem Grundelement zumindest teilweise verklebt oder verschraubt sein. Vorteilhaft ist das Spannband mit dem Grundelement zumindest an einer Seite vernietet. Denkbar wäre, dass lediglich das Spannband bei großen länglichen Objektdurchmessern, insbesondere großen Kabeldurchmessern des Kabels, beispielsweise von zumindest 12,5 mm bis höchstens 16 mm zur Fixierung des länglichen Objekts zum Einsatz kommt. Das Spannband und das Grundelement könnten das längliche Objekt in dem Fixierbereich gemeinsam fixieren.

Des Weiteren wird vorgeschlagen, dass die Zugentlastungseinheit zumindest eine Backeneinheit aufweist, welche zu einer direkten Kopplung mit dem länglichen Objekt vorgesehen ist. Damit kann eine Fixierung und/oder eine Zugentlastung zumindest eines länglichen Objekts verbessert und somit eine Effizienz weiter gesteigert werden. Zudem können vorteilhaft auch längliche Objekt mit kleineren Durchmessern, insbesondere kleineren Kabeldurchmessern, in zumindest einem Fixierbereich einer Zugentlastungseinheit fixiert werden. Unter einer direkten Kopplung der Backeneinheit mit dem länglichen Objekt soll hierbei verstanden werden, dass die Backeneinheit in dem montierten Zustand des länglichen Objekts in dem Fixierbereich zumindest teilweise formschlüssig an dem länglichen Objekt anliegt. Die Backeneinheit kann das längliche Objekt zumindest teilweise und vorzugsweise vollständig in Umfangsrichtung insbesondere in zumindest dem Fixierbereich umgeben. Die Backeneinheit kann bei länglichen Objekten, insbesondere Kabeln, mit kleinen Durchmessern, beispielsweise mit Durchmessern von zumindest 6 mm und höchstens 12,5 mm, einsetzbar sein. Je nach Durchmesser des länglichen Objekts kann die Backeneinheit eine unterschiedlich starke Materialstärke aufweisen.

In einer weiteren Ausgestaltung der Erfindung wird vorgeschlagen, dass die Backeneinheit zumindest zwei korrespondierende Backenelemente aufweist. Dadurch können eine Fixierung und/oder eine Zugentlastung zumindest eines länglichen Objekts, insbesondere eines Kabels, weiter verbessert werden. Darüber hinaus kann eine Flexibilität gesteigert werden, da mittels zumindest zwei korrespondierenden Backenelementen längliche Objekte mit unterschiedlich starken Durchmessern effizienter und sicherer fixiert und/oder zugentlastet werden können.

Die Backeneinheit könnte einen Satz von Backenelementen umfassen, welcher wiederum jeweils zumindest zwei korrespondierende Backenelemente aufweist, welche sich von zumindest zwei weiteren korrespondierenden Backenelementen des Satzes von Backenelementen hinsichtlich ihrer Materialstärke unterscheiden. Je nach Durchmesser des länglichen Objekts können aus dem Satz von Backenelementen jeweils zwei Backenelemente auswählbar sein, welche eine für die Fixierung des länglichen Objekts in dem Fixierbereich notwenige Materialstäke aufweisen. Bei dem Verfahren zur Montage, insbesondere in dem ersten Montageschritt, kann die Backeneinheit zwischen dem Spannband und dem Grundelement positioniert werden. Zumindest eins der Backenelemente kann mit dem Grundelement mittels einer Kraft- und/oder Formschlussverbindung, beispielsweise mittels einer Rast- und/oder Steck- und/oder Schraubverbindung, verbunden und/oder fixiert werden. Insbesondere wird zumindest eins der Backenelemente in dem ersten Montageschritt mit dem Grundelement verbunden. Das Spannband kann die Backeneinheit zumindest teilweise und vorteilhaft in Umfangrichtung des länglichen Objekts zumindest abschnittsweise umgeben. Zumindest eins der Backenelemente kann zumindest ein Einhängeelement zur Verbindung/Fixierung des Spannbands an dem Backenelement und/oder zur Verbindung/Fixierung des Backenelements an dem Grundelement aufweisen. Vorteilhaft ist das Spannband in zumindest das Einhängeelement eingehängt und liegt in dem montierten Zustand an zumindest dem Backenelement an.

Zudem wird vorgeschlagen, dass die Backenelemente jeweils zumindest ein Formschlusselement aufweisen, welche dazu vorgesehen sind, bei einer Montage zur Führung der Backenelemente korrespondierend ineinanderzugreifen. Dadurch kann eine Zugentlastung und/oder eine Fixierung zumindest eines länglichen Objekts weiter optimiert werden. Ferner kann damit eine Zerstörung zumindest des länglichen Objekts, und zwar aufgrund eines Einklemmens und/oder eines Zerquetschens des länglichen Objekts zwischen zumindest zwei Backenelementen verhindert werden.

Bei zumindest dem Formschlusselement kann es sich um einen Vorsprung handeln. Bei Montage des länglichen Objekts in dem Fixierbereich greifen die korrespondierenden Formschlusselemente der Backenelemente ineinander. Denkbar wäre, dass die Backenelemente jeweils mehrere Formschlusselemente aufweisen, und zwar jeweils zumindest zwei Formschlusselemente. Die Backenelemente können jeweils die korrespondierenden Formschlusselemente in einem regelmäßigen Abstand aufweisen.

Ferner wird vorgeschlagen, dass die Objektmuffenvorrichtung eine Dichteinheit zur Abdichtung zumindest eines Bereichs um das längliche Objekt aufweist, wobei die Basiseinheit zumindest teilweise von einer Trägereinheit gebildet ist, welche zur Nutzermontage mit der Dichteinheit verbindbar ist. Hierdurch kann eine Abdichtung für zumindest eines Bereichs um ein längliches Objekt, insbesondere ein Kabel, verbessert und damit wiederum eine Effizienz gesteigert werden. Ferner kann damit eine Abdichtung eines Durchführungskanals für das längliche Objekt verbessert werden. Zudem kann eine kompakte Konstruktion bereitgestellt werden, welche neben einer Zugentlastung und/oder einer Fixierung des länglichen Objekts, ebenfalls zumindest die Abdichtung für das längliche Objekt ermöglicht.

Unter einer "Dichteinheit" soll eine Einheit verstanden werden, welche dazu vorgesehen ist, zumindest das längliche Objekt in einer Objektdurchführung aufzunehmen und in einem angeordneten Zustand des länglichen Objekts in der Objektdurchführung den Bereich um das längliche Objekt, insbesondere einen Bereich zwischen einer Objektdurchführungswand der Objektdurchführung und dem länglichen Objekt, abzudichten. Mit Abdichtung zumindest des Bereichs um das längliche Objektkann eine Abdichtung für zumindest das längliche Objekt bereitgestellt werden. Vorzugsweise ist das erste Basiselement Teil der Trägereinheit. Das zweite Basiselement kann Teil der Trägereinheit sein. Bevorzugt sind das erste Basiselement und das zweite Basiselement gegenüberliegend zueinander angeordnet. Bei der Nutzermontage kann die Dichteinheit zwischen der ersten Basiseinheit und der zweiten Basiseinheit anordenbar sein. Bei dem Verfahren zur Montage der Objektmuffenvorrichtung kann die Dichteinheit mit der Trägereinheit verbunden werden. Insbesondere in einem dritten Montageschritt wird die Dichteinheit mit der Trägereinheit verbunden. Nach Durchführung der Nutzermontage kann die Dichteinheit in zumindest einem Montagezustand mit der Trägereinheit verbunden sein. Die Dichteinheit könnte mittels einer Kraft- und/oder Form- und/oder Stoffschlussverbindung mit der Trägereinheit verbindbar sein. Bevorzugt sind die Trägereinheit und die Dichteinheit in zumindest einem Montagezustand zumindest teilweise mittels einer Rastverbindung miteinander verbunden.

Die Dichteinheit kann ein erstes Modulelement und vorteilhaft ein zweites Modulelement aufweisen. Bevorzugt sind das erste Modulelement und das zweite Modulelement identisch zueinander ausgebildet. Das erste Modulelement und/oder das zweite Modulelement können zumindest die Objektdurchführung zumindest teilweise ausbilden. Das erste Modulelement und das zweite Modulelement sind vorteilhaft separat voneinander bei Nutzermontage, insbesondere in dem dritten Montageschritt, mit der Trägereinheit verbindbar. Insbesondere in dem dritten Montageschritt wird zumindest eines der Modulelemente zwischen dem ersten Basiselement und zumindest dem zweiten Basiselement angeordnet. Beispielsweise nach Positionierung des ersten Modulelements zwischen dem ersten Basiselement und zumindest dem zweiten Basiselement kann in dem dritten Montageschritt das zweite Modulelement zwischen dem ersten Basiselement und zumindest dem zweiten Basiselement angeordnet werden.

Wenn die Dichteinheit zumindest ein Dichtelement und zumindest ein Schalungselement aufweist, welche über ein Spritzverfahren stoffschlüssig miteinander verbunden sind, kann eine Effizienz, hinsichtlich einer Produkt- und/oder Arbeits- und/oder Montage- und/oder Herstellungs- und/oder Kosteneffizienz, gesteigert werden. Zudem kann auf zusätzliche Kraft- und/oder Formschlussverbindungen, wie beispielsweise Schraub- und/oder Rastverbindungen zwischen einem Schalungselement und einem Dichtelement verzichtet werden.

Vorzugsweise handelt es sich bei dem Spritzverfahren um ein Mehrkomponenten-Spritzgussverfahren. Besonders bevorzugt ist die Dichteinheit, insbesondere das Dichtelement und zumindest das Schalungselement, zumindest teilweise und vorzugsweise vollständig in einem Zwei-Komponenten-Spritzgussverfahren hergestellt.

Insbesondere ist das Schalungselement dazu vorgesehen, das Dichtelement in zumindest einer Richtung nach außen hin zumindest teilweise zu begrenzen. Das Dichtelement trägt als Teil der Dichteinheit zur Abdichtung zumindest der Objektdurchführung bei. Insbesondere ist zumindest die Objektdurchführung zumindest teilweise, und vorzugsweise vollständig, von zumindest einer Ausnehmung des Dichtelements und/oder des Schalungselements gebildet, welche das Dichtelement und/oder das Schalungselement zumindest in eine Richtung wenigstens zu einem Großteil und bevorzugt vollständig durchdringt. Unter einer "Aussparung" soll in diesem Dokument prinzipiell ein Volumen verstanden werden, welches frei von fester und/oder flüssiger Materie ist. Bevorzugt ist zumindest die Objektdurchführung als eine Kabeldurchführung, insbesondere als ein Kabeldurchführungskanal, für zumindest das längliche Objekt, insbesondere das Kabel, ausgebildet. Bei dem Verfahren zur Montage der Objektmuffenvorrichtung kann zumindest das längliche Objekt in zumindest der Objektdurchführung anordenbar sein. Insbesondere in einem dritten Montageschritt wird zumindest eins der Modulelemente zwischen dem ersten Basiselement und zumindest dem zweiten Basiselement angeordnet.

Das Dichtelement kann zumindest ein bei zumindest 20°C werkzeuglos makroskopisch verformbares Material aufweisen und ist vorzugsweise von diesem zu wenigstens einem Großteil ausgebildet. Vorzugsweise ist das Dichtelement zumindest teilweise, bevorzugt zumindest zu einem Großteil und besonders bevorzugt vollständig aus einem Gel-Element ausgebildet. Hierdurch kann eine Abdichtung für zumindest ein längliches Objekt weiter verbessert und eine Flexibilität sowie eine Effizienz gesteigert werden, und zwar dahingehend, dass aufgrund eines zumindest teilweise als Gel-Element ausgebildeten Dichtelements eine optimale Anpassung an zumindest einen Durchmesser eines eingeführten länglichen Objekts bereitgestellt werden kann. Darüber hinaus kann eine vorteilhaft kompakte und einfache Konstruktion bereitgestellt werden.

Denkbar wäre, dass das Dichtelement mehrere Teildichtelemente aufweist, welche jeweils zumindest ein Gel-Element aufweisen können. Bevorzugt ist das Dichtelement vollständig aus dem Gel-Element ausgebildet und bildet damit einen Gel-Körper. Unter einem "Gel-Element/Gelkörper" soll ein Element verstanden werden, welches eine weiche, aber zumindest unter geringer Last, formstabile Hülle aufweist, welche von einem zähflüssigen zumindest gelartigen Material gefüllt ist. Insbesondere ist die Hülle des Gel-Elements/Gelkörpers von einem gleichen Material wie das Füllmaterial gebildet, wobei das zähflüssige, gelartige Material an die Hülle bildenden Grenzflächen durch einen chemischen und/oder physikalischen Prozess in einen festen Zustand übergeführt ist. Vorteilhaft ist das Dichtelement, insbesondere das Gel-Element, zumindest teilweise, vorteilhaft wenigstens zu einem Großteil, von zumindest einem Polymer, insbesondere einem Copolymer, vorzugsweise einem Blockcopolymer, und zwar besonders bevorzugt SEBS (Styrol-Ethylen-Butylen-Styrol), und/oder einem Elastomeren Werkstoff inkludierend thermoplastischer Elastomere, beispielsweise Polyurethan, gebildet. Bevorzugt werden diesen Elastomeren Werkstoffen Additive, wie beispielsweise Öle, zur Erreichung der Gelartigkeit zugesetzt. Alternativ und/oder zusätzlich ist denkbar, dass das Dichtelement zumindest eine gasgefüllte, vorzugsweise flexible Hülle aufweist. Das Dichtelement kann elastische Eigenschaften aufweisen. Insbesondere ist das Dichtelement unter Standardbedingungen formbeständig, wobei das Gel zumindest unter einer geringen, insbesondere mechanischen Belastung eine reversible Formänderung vollführt und anschließend bei einer Abwesenheit der Belastung seine ursprüngliche Form annimmt. Vorteilhaft ist das Dichtelement reversibel verformbar, wobei es eine vor einer Verformung bestehende Form einnimmt.

Bevorzugt weist das Dichtelement in einem Innenbereich Freistellungen auf, welche bei einem Zusammendrücken des Dichtelements zu einer gleichmäßigen Kompression des Dichtelements vorgesehen sind/beitragen. Das Dichtelement weist vorzugsweise zumindest zwei Freistellungen auf. Die Freistellungen könnten eine längliche und/oder oval förmige Form aufweisen.

Wenn die Dichteinheit zumindest eine das Dichtelement umgreifende Begrenzungseinheit aufweist, kann eine Effizienz hinsichtlich einer Abdichtung weiter gesteigert werden. Zudem kann mittels der Begrenzungseinheit ein ungewolltes Verrutschen und/oder Verschieben und/oder Heraustreten eines Dichtelements, insbesondere bei Komprimierung des Dichtelements, verhindert werden. Die Begrenzungseinheit könnte an dem Schalungselement angeordnet sein. Möglicherweise kann die Begrenzungseinheit eine entlang des Schalungselements umlaufende das Dichtelement begrenzende Einheit sein. Vorteilhaft ist die Begrenzungseinheit eine im Bereich zumindest der Objektdurchführung angeordnete das Dichtelement begrenzende Einheit. Bevorzugt weist die Begrenzungseinheit segmentartige Begrenzungselemente auf. Die Begrenzungselemente können als sogenannte Fiederungen ausgebildet sein. Die Begrenzungselemente können umlaufend an dem Schalungselement angeordnet sein. Vorzugsweise ist die Begrenzungseinheit, insbesondere die Begrenzungselemente, zumindest teilweise, bevorzugt vollständig, einstückig, vorteilhaft einteilig, mit dem Schalungselement ausgebildet. Vorteilhaft sind die Begrenzungselemente im Bereich zumindest der Objektdurchführung und/oder in der Objektdurchführung angeordnet. Insbesondere bildet die Begrenzungseinheit eine Begrenzung in Richtung der Objektdurchführung, insbesondere der Kabeldurchführung, für das Dichtelement aus.

Außerdem wird vorgeschlagen, dass die Begrenzungseinheit, insbesondere die Begrenzungselemente, in einem Abdichtungsvorgang zumindest teilweise elastisch verformbar ist. Dadurch kann eine Effizienz hinsichtlich einer Abdichtung weiter optimiert werden. Zudem kann mittels einer zumindest teilweise elastisch verformbaren Begrenzungseinheit ein ungewolltes Verrutschen und/oder Verschieben und/oder Heraustreten eines Dichtelements gerade bei Komprimierung des Dichtelements verhindert werden. Unter einem "elastischen Element" soll ein Element verstanden werden, das wiederholt verformbar ist, ohne dass dadurch das Element mechanisch beschädigbar oder zerstörbar ist, und welches insbesondere nach einer Verformung selbstständig wieder einer Grundform zustrebt.

Bevorzugt ist der Abdichtungsvorgang Teil eines vierten Montageschritts des Verfahrens zur Montage der Objektmuffenvorrichtung. In dem vierten Montageschritt kann das Dichtelement komprimiert und damit eine Abdichtung für zumindest das längliche Objekt bereitgestellt werden. Die Objektmuffenvorrichtung kann ein Bedienelement aufweisen. Das Bedienelement könnte als ein Drehknopf und/oder Druckknopf und/oder Hebel ausgebildet sein. Bevorzugt ist das Bedienelement Teil der Basiseinheit und besonders bevorzugt mit dem ersten Basiselement und/oder dem zweiten Basiselement verbunden. Das Schalungselement kann in dem montierten Zustand der Dichteinheit einen Druck auf das Dichtelement ausüben. Vorteilhaft verhindert der Druck eine Rückformung des Dichtelements. Insbesondere dient das Bedienelement einer Einstellung des Drucks und einer Komprimierung des Dichtelements. In dem vierten Montageschritt, welcher auch als ein Abdichtungsschritt bezeichnet werden kann, kann beispielsweise durch Drehen und/oder Verschieben des Bedienelements das Dichtelement verformt und damit eine Abdichtung für zumindest das längliche Objekt bereitgestellt werden. Durch die Verformung des Dichtelements kann das Dichtelement zumindest das längliche Objekt innerhalb zumindest der Objektdurchführung abdichten. Besonders bevorzugt weist das Bedienelement eine Überdrehsicherung auf.

Damit eine Abdichtung noch weiter verbessert und eine Effizienz gesteigert werden kann, wird vorgeschlagen, dass die Dichteinheit zumindest eine Außenbegrenzungseinheit aufweist, welche das Dichtelement an einer einem Objektkanal, insbesondere einem Kabelkanal, abgewandten Außenwandfläche übergreift. Bevorzugt handelt es sich bei dem Objektkanal um die Objektdurchführung. Das Dichtelement weist die Außenwandfläche auf. Vorzugsweise ist die Außenbegrenzungseinheit Teil der Begrenzungseinheit. Die Außenbegrenzungseinheit kann Außenbegrenzungselemente aufweisen. Bevorzugt sind die Außenbegrenzungselemente segmentartig ausgebildet. Die Außenbegrenzungselemente können als sogenannte Fiederungen ausgebildet sein. Vorteilhaft sind die Außenbegrenzungselemente zumindest teilweise elastisch verformbar. Die Außenbegrenzungseinheit kann an dem Schalungselement angeordnet sein.

Vorzugsweise ist die Außenbegrenzungseinheit eine entlang des Schalungselements umlaufende das Dichtelement an der Außenwandfläche begrenzende Einheit. Denkbar wäre, dass die Außenbegrenzungselemente und die Begrenzungselemente zumindest im Wesentlichen zueinander identisch ausgebildet sind.

Darüber hinaus geht die Erfindung aus von einem Verfahren zur Montage einer Objektmuffenvorrichtung, insbesondere der zuvor genannten Objektmuffenvorrichtung. Durch ein derartiges Verfahren kann eine Effizienz, und zwar bezüglich einer Montage und/oder Demontage und/oder Abdichtung und/oder Zugentlastung und/oder Fixierung gesteigert werden. Ferner kann ein Montageaufwand reduziert werden.

Die Objektmuffenvorrichtung und/oder die Objektmuffe und/oder das Verfahren soll/sollen hierbei nicht auf die oben beschriebene Anwendung und Ausführungsform beschränkt sein. Insbesondere kann/können die Objektmuffenvorrichtung und/oder die Objektmuffe und/oder das Verfahren zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen. Zudem sollen bei den in diesem Dokument angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Teilschnittdarstellung einer Objektmuffe mit einer Objektmuffenvorrichtung,
- Fig. 2: eine Detailansicht eines Dichtblocks der Objektmuffe gemäß Figur 1,
- Fig. 3: eine weitere Detailansicht des Dichtblocks gemäß Figur 2,
- Fig. 4: eine Basiseinheit und zumindest eine Zugentlastungseinheit der Objektmuffenvorrichtung,
- Fig. 5: eine Detailansicht der Zugentlastungseinheit,
- Fig. 6: eine weitere Detailansicht der Zugentlastungseinheit,
- Fig. 7: einen Horizontalschnitt durch die Zugentlastungseinheit,
- Fig. 8: eine Backeneinheit der Zugentlastungseinheit,
- Fig. 9: die Zugentlastungseinheit mit einem in zumindest einem Fixierbereich der Zugentlastungseinheit fixierten als Kabel ausgebildeten länglichen Objekts,
- Fig. 10: eine Schieneneinheit der Objektmuffenvorrichtung zur Verschiebung der Zugentlastungseinheit auf der Basiseinheit,
- Fig. 11: eine Dichteinheit der Objektmuffenvorrichtung in einem zumindest teilweise angeordneten Zustand an einer Trägereinheit der Basiseinheit,
- Fig. 12: die Dichteinheit in einem vollständig angeordneten Zustand an der Trägereinheit,
- Fig. 13: eine Begrenzungseinheit und eine Außenbegrenzungseinheit der Dichteinheit,
- Fig. 14: eine Schnittdarstellung eines Teils der Objektmuffenvorrichtung angeordnet in dem Dichtblock und
- Fig. 15: ein schematisch dargestelltes Ablaufdiagramm eines Verfahrens zur Montage der Objektmuffenvorrichtung.

### Beschreibung des Ausführungsbeispiels

Nachfolgend handelt es sich bei den vorliegenden Figuren um schematische und nicht maßstabsgetreue Darstellungen. Wenn nicht anders angegeben, ist von mehrfach vorhandenen Objekten lediglich eins mit einem Bezugszeichen versehen.

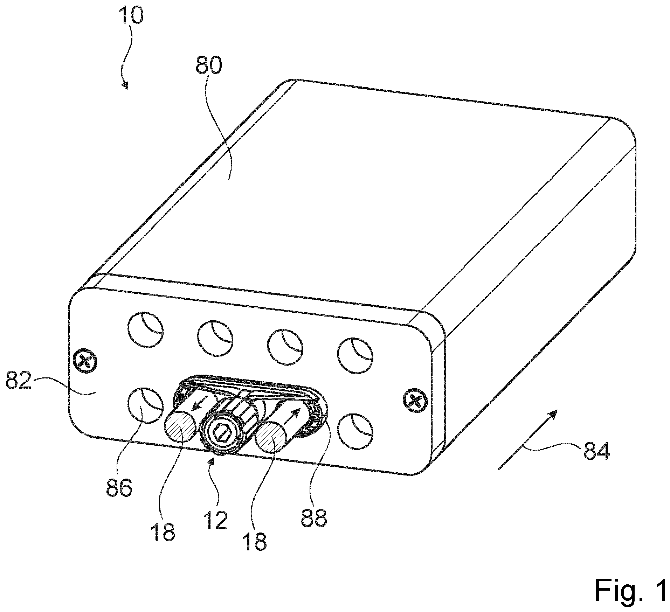

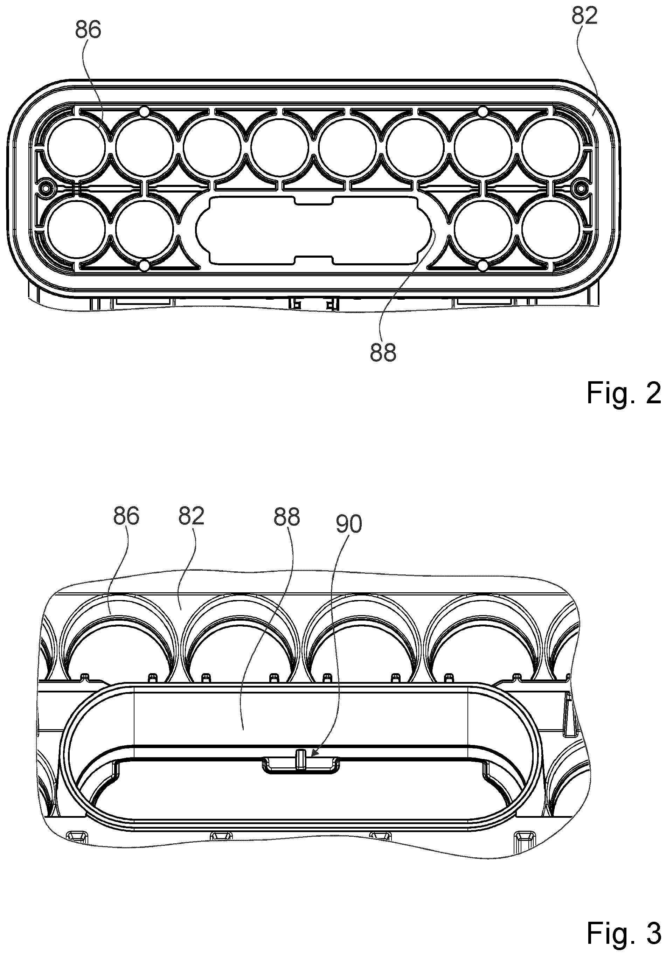

Fig. 1 zeigt eine Teilschnittdarstellung einer Objektmuffe 10. Die Objektmuffe 10 ist vorliegend als Kabelmuffe ausgebildet. Die Objektmuffe 10 weist eine Gehäuseeinheit 80 auf. Die Gehäuseeinheit 80 ist einseitig offen. Alternativ wäre auch denkbar, dass die Gehäuseeinheit 80 mehrseitig offen ist. Die Objektmuffe 10 weist einen Dichtblock 82 auf. Der Dichtblock 82 ist zur Abdichtung der Gehäuseeinheit 80 an der Gehäuseeinheit 80 angeordnet. In dieser beispielhaften Ausgestaltung ist der Dichtblock 82 an die Gehäuseeinheit 80 angeschraubt. Alternativ und/oder zusätzlich wären auch andere Kraft- und/oder Form- und/oder Stoffschlussverbindungen möglich. Vorliegend besteht der Dichtblock 82 zumindest teilweise aus Hartplastik. Alternativ könnte der Dichtblock 82 auch aus anderen wetterbeständigen Materialien bestehen. Der Dichtblock 82 weist Kabelaufnahmen 86 zur Aufnahme von Kabeln auf (nicht dargestellt). Vorliegend sind die Kabelaufnahmen 86 als kreisförmige Aussparungen ausgebildet. Ferner umfasst der Dichtblock 82 eine Loopaufnahme 88. Die Loopaufnahme 88 ist in dieser beispielhaften Ausführung als eine zumindest im Wesentlichen ovale Aussparung ausgebildet. Die Figuren 2 und 3 zeigen jeweils Detailansichten des Dichtblocks 82, wobei die Figur 2 eine Draufsicht und Figur 3 eine Rückansicht des Dichtblocks 82 zeigt.

Die Objektmuffe 10 weist eine Objektmuffenvorrichtung 12 auf. Die Objektmuffenvorrichtung 12 ist vorliegend als Kabelmuffenvorrichtung ausgebildet. Die Objektmuffenvorrichtung 12 ist zumindest zur Aufnahme, Dichtung und/oder Fixierung zumindest eines länglichen Objekts 18 vorgesehen (vgl. Figur 1). In einem montierten Zustand ist das längliche Objekt 18 in zumindest der Objektmuffenvorrichtung 12 angeordnet. Das gemäß Figur 1 dargestellte längliche Objekt 18 ist mittels der Objektmuffenvorrichtung 12 in dem montierten Zustand in die Gehäuseeinheit 80 hinein und wieder aus der Gehäuseeinheit 80 herausgeführt. Die Objektmuffenvorrichtung 12 und die Objektmuffe 10 sind Teil einer Loop-Baugruppe bzw. bilden diese vorliegend aus. Die Loopaufnahme 88 ist zur Aufnahme der Objektmuffenvorrichtung 12 vorgesehen. Die Objektmuffenvorrichtung 12 ist entlang einer Einführrichtung 84 in die Loopaufnahme 88 einsetzbar. In dem montierten Zustand ist die Objektmuffenvorrichtung 12 in die Loopaufnahme 88 eingesetzt. Die Objektmuffenvorrichtung 12 kann in der Loopaufnahme 88 fixiert sein. Hierbei können bereits bekannte Steck- und/oder Schraub- und/oder Rastverbindungen zur Fixierung der Objektmuffenvorrichtung 12 in der Loopaufnahme 88 verwendet sein. In Figur 3 ist ersichtlich, dass die Loopaufnahme 88 zumindest eine Rippe 90 aufweist.

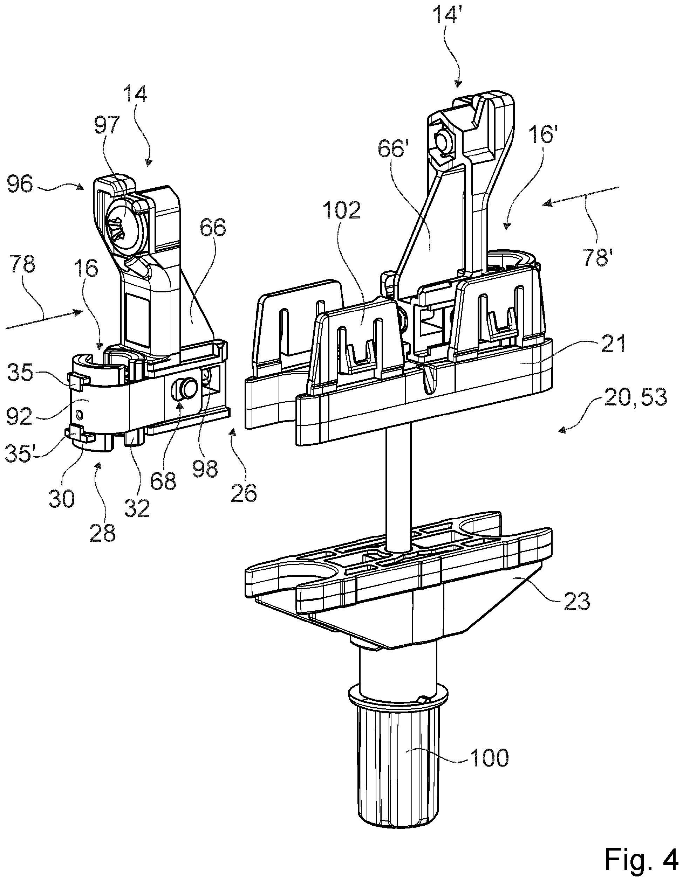

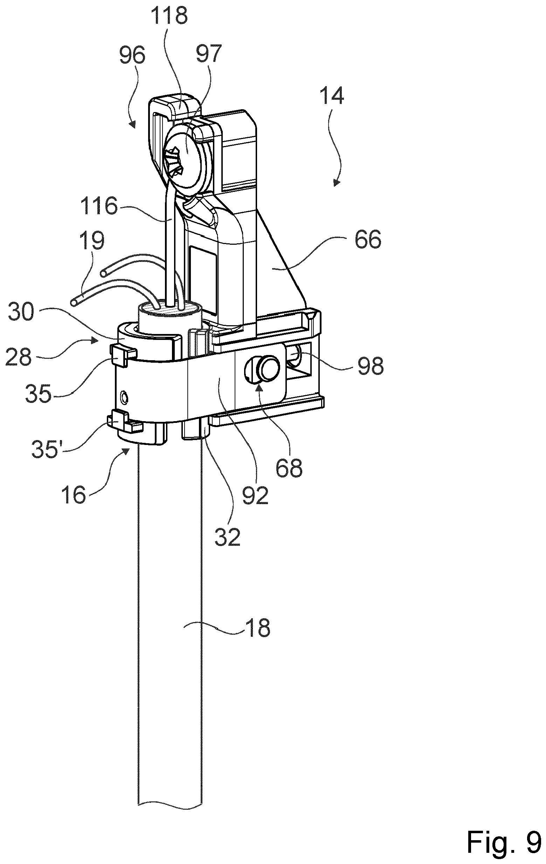

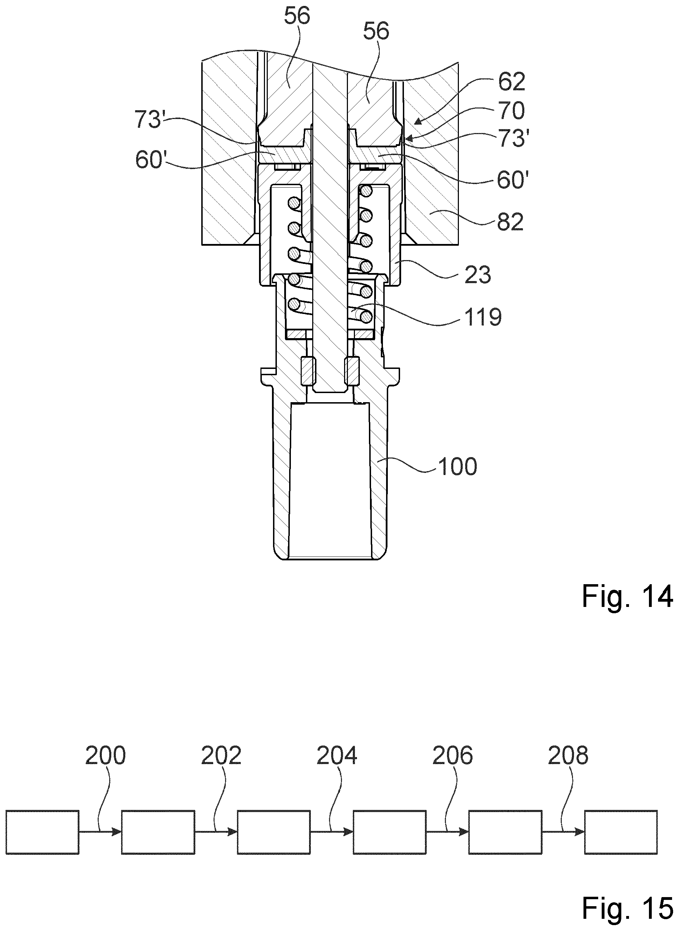

Die Objektmuffenvorrichtung 12 weist zumindest eine Zugentlastungseinheit 14 auf (vgl. beispielhaft Figuren 4 bis 7 und 9). Die Zugentlastungseinheit 14 ist als eine Loop-Zugentlastungseinheit ausgebildet. In den Figuren 4 bis 13 wird der Aufbau der Objektmuffenvorrichtung 12 bzw. Teile der Objektmuffenvorrichtung 12 detailliert beschrieben. Der Übersichtlichkeit halber ist das fixierte längliche Objekt 18 in den Figuren 4 bis 8 und 10 bis 13 nicht dargestellt. Lediglich in Figur 9 ist eine Fixierung des länglichen Objekts 18 in der Zugentlastungseinheit 14 verdeutlicht. In Figur 15 ist ein schematisches Ablaufdiagramm eines Verfahrens zur Montage der Objektmuffenvorrichtung 12 dargestellt. Das Verfahren zur Montage kann mehrere Verfahrensschritte aufweisen. Vorliegend wird das Verfahren beispielhaft anhand eines ersten Montageschritts 200, eines zweiten Montageschritts 202, eines dritten Montageschritts 204, eines vierten Montageschritts 206 und zumindest eines vierten Montageschritts 208 beschrieben.

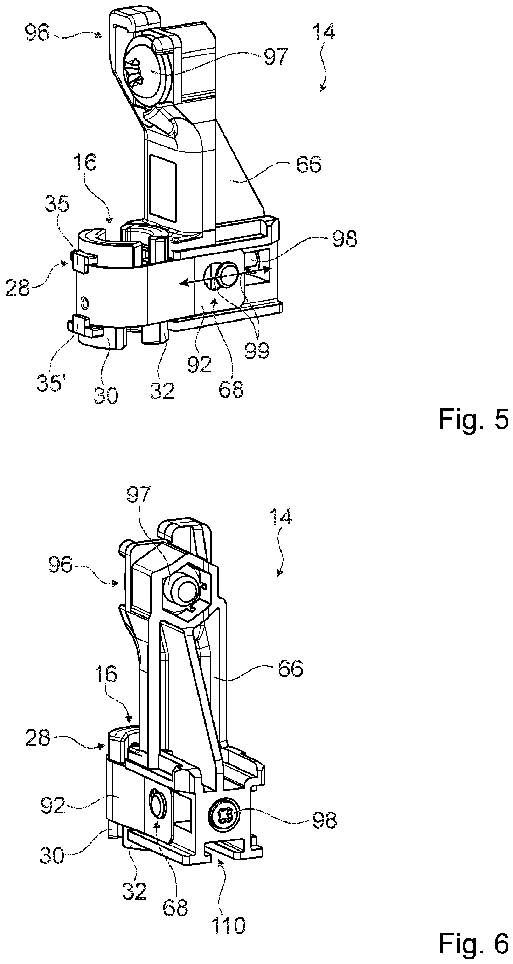

Die Objektmuffenvorrichtung 12 weist eine Basiseinheit 20 auf (vgl. beispielsweise Figur 4). Die Basiseinheit 20 umfasst ein erstes Basiselement 21 und ein zweites Basiselement 23. Zumindest Figur 4 zeigt, dass die Basiseinheit 20, und zwar vorliegend das erste Basiselement 21 dazu vorgesehen ist, zumindest die Zugentlastungseinheit 14 zu tragen und/oder zu halten. Vorliegend umfasst die Objektmuffenvorrichtung 12 neben der Zugentlastungseinheit 14 zumindest eine weitere Zugentlastungseinheit 14'. Ist die Zugentlastungseinheit 14 dazu vorgesehen, in dem montierten Zustand das in die Gehäuseeinheit 80 hineinführende längliche Objekt 18 zu fixieren und zugzuentlasten, ist die Zugentlastungseinheit 14' dazu vorgesehen, das aus der Gehäuseeinheit 80 herausführende längliche Objekt 18 zu fixieren und zugzuentlasten. Die Zugentlastungseinheit 14 weist einen Fixierbereich 16 für zumindest das längliche Objekt 18 auf (vgl. Figur 5, 6 und 9). Vorliegend fixiert die Zugentlastungseinheit 14 in zumindest dem Fixierbereich 16 einen in die Gehäuseeinheit 80 hineingehenden Abschnitt des längliche Objekts 18. Der hineingehende Abschnitt des längliche Objekts 18 verläuft durch die Objektmuffenvorrichtung 12 in einen Innenraum (nicht dargestellt) der Objektmuffe 10, welcher durch die Gehäuseeinheit 80 und den Dichtblock 82 nach außen begrenzt ist (vgl. Figur 1). Die Zugentlastungseinheit 14' weist zu einer Fixierung eines herausgehenden Abschnitts des länglichen Objekts 18 einen Fixierbereich 16' auf (vgl. Figur 4). Der hinausgehende Abschnitt des länglichen Objekts 18 verläuft durch die Objektmuffenvorrichtung 12 aus dem Innenraum der Objektmuffe 10 nach außen (vgl. Figur 1). Die Zugentlastungseinheiten 14, 14' sind vorliegend identisch zueinander ausgebildet, sodass im Folgenden lediglich die Zugentlastungseinheit 14 weiter beschrieben wird. Die Ausführungen und Beschreibungen lassen sich ebenfalls auf die Zugentlastungseinheit 14' übertragen.

Um einen Komfort und eine Effizienz, und zwar gerade eine Montage- und/oder Demontageeffizienz zu steigern, sind zu einer Vormontage des länglichen Objekts 18 mit der Zugentlastungseinheit 14, die Zugentlastungseinheit 14 und die Basiseinheit 20 zumindest teilweise trennbar voneinander ausgebildet. In dieser beispielhaften Ausgestaltung sind die Zugentlastungseinheit 14 und die Basiseinheit 20 vollständig voneinander trennbar ausgebildet. Figur 4 zeigt einen Zustand, in welchem die Zugentlastungseinheit 14 von der Basiseinheit 20 separiert ist. Die Zugentlastungseinheit 14' ist hierbei bereits mit der Basiseinheit 20 verbunden, und zwar an der Basiseinheit 20 angeordnet. Bevor im Detail auf die Montage zumindest der Zugentlastungseinheit 14 an der Basiseinheit 20 eingegangen wird, erfolgt zuerst eine Beschreibung des Aufbaus der Zugentlastungseinheit 14.

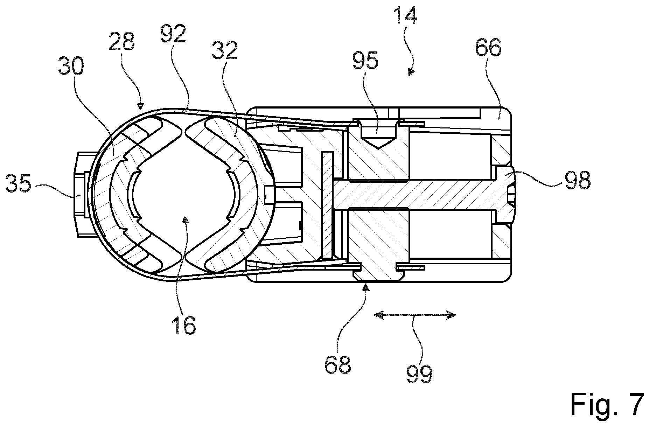

Der Fixierbereich 16 ist durch zumindest ein Spannband 92 der Zugentlastungseinheit 14 begrenzt. Der Aufbau und die Fixierung des Spannbands 92 sind zumindest in den Figuren 5 bis 7 verdeutlicht. Auf einer Seite ist das Spannband 92 an einem Grundelement 66 der Zugentlastungseinheit 14 mittels Vernietung 95 fixiert. Auf der anderen Seite, und zwar vorliegend einer gegenüberliegenden Seite weist das Spannband 92 eine Öffnung 68 zur Aushängung von dem Grundelement 66 auf. Mittels einer Einstelleinheit 98 der Zugentlastungseinheit 14 ist der Fixierbereich 16 in seiner Größe verstellbar und/oder anpassbar. Die Einstelleinheit 98 ist dazu vorgesehen, die Größe des Fixierbereichs 16 einzustellen. Figuren 5 und 7 zeigen eine Einstellrichtung 99, in welche sich mittels der Einstelleinheit 98 die Größe des Fixierbereichs 16 verändern lässt. Vorliegend ist die Einstelleinheit 98 als eine Stellschraube ausgebildet. Die Einstelleinheit 98 ist zur Einstellung der Größe des Fixierbereichs 16 durch einen Benutzer betätigbar. Der Benutzer kann die als Stellschraube ausgebildete Einstelleinheit 98 drehen, um damit die Größe des Fixierbereichs 16 zu justieren, und zwar in Abhängigkeit von einem Durchmesser des zu fixierenden längliche Objekts 18, vorliegend in Abhängigkeit eines Kabeldurchmessers. Hierzu weist die Einstelleinheit 98 eine Justiervertiefung zur Aufnahme eines Werkzeugs, beispielsweise eines Schraubenziehers, auf.

In der vorliegenden Ausgestaltung ist vorgesehen, das längliche Objekt 18 mit Durchmessern von zumindest 6 mm und höchstens 16 mm in zumindest dem Fixierbereich 16 zu fixieren. In Abhängigkeit von dem Durchmesser des zu fixierenden länglichen Objekts18 kann beispielsweise lediglich das Spannband 92 mit dem Grundelement 66 das längliche Objekt 18 umgeben. In diesem Fall können das Spannband 92 und das Grundelement 66 den Fixierbereich 16 definieren. Beispielsweise bei großen länglichen Objektdurchmessern von zumindest 12,5 mm bis höchstens 16 mm liegt das Spannband 92 direkt an dem längliche Objekt 18 an (diese Variante ist nicht dargestellt).

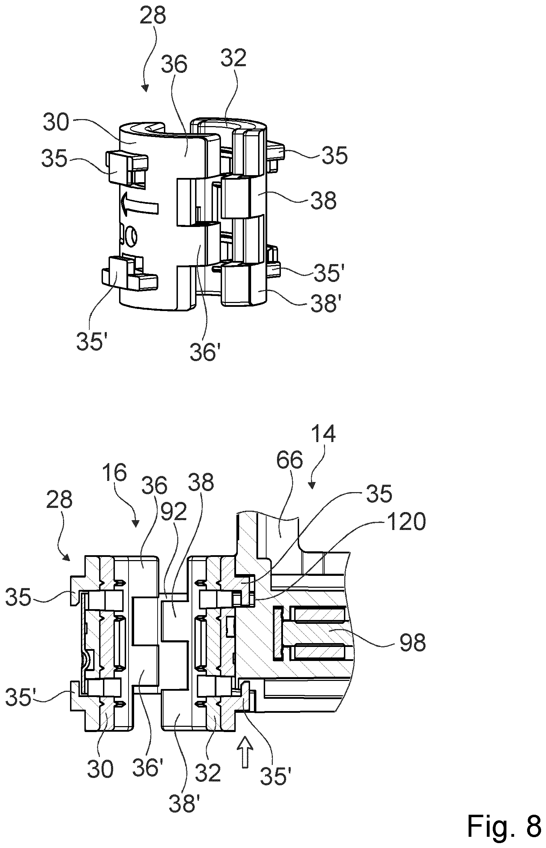

Um eine Fixierung für längliche Objekt 18 mit kleinen Objektdurchmessern von zumindest 6 mm und höchstens 12,5 mm bereitzustellen, weist die Zugentlastungseinheit 14 zumindest eine Backeneinheit 28 auf, welche zu einer direkten Kopplung mit dem länglichen Objekt 18 vorgesehen ist (vgl. Figur 9). Die Backeneinheit 28 weist zumindest zwei korrespondierende Backenelemente 30, 32 auf. Je nach Durchmesser des länglichen Objekts 18 kann/können die Backeneinheit 28, und zwar die Backenelemente 30, 32 mit unterschiedlichen Materialstärken zur Fixierung des länglichen Objekts 18 ausgebildet sein. Vorliegend ist die Variante mit Einsatz der Backeneinheit 28 dargestellt. Eine Detailansicht der Backeneinheit 28 ist in Figur 8 zu sehen. Die Backenelemente 30, 32 umfassen jeweils zumindest ein Formschlusselement 36, 38, welche dazu vorgesehen sind, bei der Montage des länglichen Objekts 18 in dem Fixierbereich 16 zur Führung der Backenelemente 30, 32 korrespondierend ineinanderzugreifen. Aufgrund der korrespondierend ineinandergreifenden Formschlusselemente 36, 38 kann ein Zerquetschen des länglichen Objekts 18 zwischen den Backenelementen 30, 32 verhindert werden. Vorliegend ist zumindest das Formschlusselement 36 Teil des Backenelements 30. Zumindest das Formschlusselement 38 ist Teil des Backenelements 32. In dieser beispielhaften Ausführung weist jedes Backenelement 30, 32 jeweils zwei Formschlusselemente 36, 36', 38, 38' auf. Denkbar wäre auch, dass die Backenelemente 30, 32 eine geringere oder eine höhere Anzahl an Formschlusselementen 36, 38, als die hier dargestellten Formschlusselemente 36, 38 aufweisen. Die Formschlusselemente 36, 38 sind als Vorsprünge ausgebildet. In dieser beispielhaften Ausführung definieren die Backenelemente 30, 32 den Fixierbereich 16.

Zur Fixierung mit dem Spannband 92 und/oder dem Grundelement 66 weisen die Backenelemente 30, 32 jeweils Einhängeelemente 35, 35' auf. Die Einhängeelemente 35, 35' sind bei beiden Backenelementen 30, 32 jeweils identisch ausgebildet, demnach ist lediglich ein Bezugszeichen für dieses Element verwendet (vgl. Figur 8). In dieser beispielhaften Ausführung weist jedes Backenelement 30, 32 jeweils zwei Einhängeelemente 35, 35' auf. Die Figuren 5 und 8 zeigen, dass die Einhängeelemente 35, 35' des Backenelements 30 zu einer Verbindung mit dem Spannband 92 vorgesehen sind. Das Spannband 92 ist in einem fixierten Zustand zwischen den Einhängeelementen 35, 35' des Backenelements 30 eingesetzt. Figur 8 zeigt, dass das Backenelement 30 einen Pfeil zur Montagehilfe aufweist, welcher eine Montagerichtung des Backenelements 30 auf der Seite des Spannbands 92 angibt. Die Einhängeelemente 35, 35' des Backenelements 32 sind zu einer Fixierung des Backenelements 32 mit dem Grundelement 66 vorgesehen. Hierbei ist das Backenelement 32 von unten in das Grundelement 66 einsetzbar. Das Einhängeelement 35 ist in eine obere Vertiefung 120 des Grundelements 66 schwenkbar und/oder einsetzbar, während das Einhängeelement 35' sich von unten mit dem Grundelement 66 verrastet (vgl. Figur 8). Figur 8 zeigt eine Schnittdarstellung zur Verdeutlichung des montierten Zustands der Backenelemente 30, 32.

Bei der Vormontage wird ein an den Durchmesser des länglichen Objekts 18 angepasste Backeneinheit 28 zwischen dem Spannband 92 und dem Grundelement 66 montiert. Die Vormontage ist vorliegend Teil des Verfahrens zur Montage der Objektmuffenvorrichtung 12. In dieser beispielhaften Ausführung ist die Vormontage Teil des ersten Montageschritts 200. Bei der Vormontage wird das längliche Objekt 18 in dem Fixierbereich 16 an der Zugentlastungseinheit 14 fixiert, und zwar vorliegend in dem getrennten Zustand von Zugentlastungseinheit 14 und Basiseinheit 20. Bei dem Verfahren zur Montage, und zwar in dem ersten Montageschritt 200, wird das längliche Objekt 18 und die Backeneinheit 28 zwischen dem Spannband 92 und dem Grundelement 66 angeordnet. Figur 9 zeigt den fixierten Zustand des länglichen Objekts 18 nach der Vormontage. Das längliche Objekt 18 ist in dem Fixierbereich 16 in Umfangsrichtung vollständig fixiert. Die Backeneinheit 28 umgibt das längliche Objekt 18 zumindest teilweise in Umfangsrichtung.

Bei dem länglichen Objekt 18 handelt es sich in dieser beispielhaften Ausführung um ein optisches Kabel, und zwar ein Glasfaserkabel. Das längliche Objekt 18 könnte alternativ und/oder zusätzlich auch ein Rohr, beispielsweise ein Einblasrohr, oder ein Blindstopfen sein. Das längliche Objekt 18 könnte nur einen Leiter 19 umfassen. Vorliegend umfasst das längliche Objekt 18 mehrere Leiter 19. Beispielhaft sind in Figur 9 zwei Leiter 19 dargestellt, wobei nur ein Leiter 19 mit einem Bezugszeichen versehen ist. Das längliche Objekt 18 umfasst ein Zentralstützelement 116. Das Zentralstützelement 116 ist mittig zwischen den Leitern 19 angeordnet. Die Zugentlastungseinheit 14 weist einen weiteren Fixierbereich 96 auf. Der weitere Fixierbereich 96 ist dazu vorgesehen, zumindest das Zentralstützelement 116 zu fixieren. Die Zugentlastungseinheit 14 umfasst ein Klemmelement 97. Das Klemmelement 97 ist vorliegend beispielhaft als Schraube ausgebildet. Das Zentralstützelement 116 ist in der Vormontage zwischen dem Klemmelement 97 und dem Grundelement 66 einklemmbar und damit in dem Fixierbereich 96 fixierbar. In der Vormontage wird das längliche Objekt 18 in dem Fixierbereich 16 zu einer Weiterbenutzung und das Zentralstützelement 116 in dem weiteren Fixierbereich 96 fixiert. Beispielsweise könnte das längliche Objekt 18 bei Vormontage zuerst in dem Fixierbereich 16 fixiert und anschließend zur Freilegung zumindest des Leiters 19 und/oder zumindest des Zentralstützelement 116 zumindest teilweise entmantelt werden. Vorliegend erfolgt die Abmantelung zumindest teilweise vor der Fixierung des länglichen Objekts 18 in zumindest dem Fixierbereich 16. Nach Abschluss der Vormontage ist das längliche Objekt 18 in dem Fixierbereich 16 und zumindest das Zentralstützelement 116 in dem weiteren Fixierbereich 96 fixiert. In dem fixierten Zustand des Zentralstützelements 116 stößt das Zentralstützelement 116 an einem Abdeckelement 118 der Zugentlastungseinheit 14 an (vgl. Figur 9). Das Abdeckelement 118 fungiert als Stopper und Abdeckung für das Zentralstützelement 116.

In dem zweiten Montageschritt 202 des Verfahrens zur Montage wird die Zugentlastungseinheit 14 mit der Basiseinheit 20 verbunden. Hinsichtlich eines zeitlichen Verlaufs erfolgt der zweite Montageschritt 202 nach dem ersten Montageschritt 200 (vgl. Figur 15).

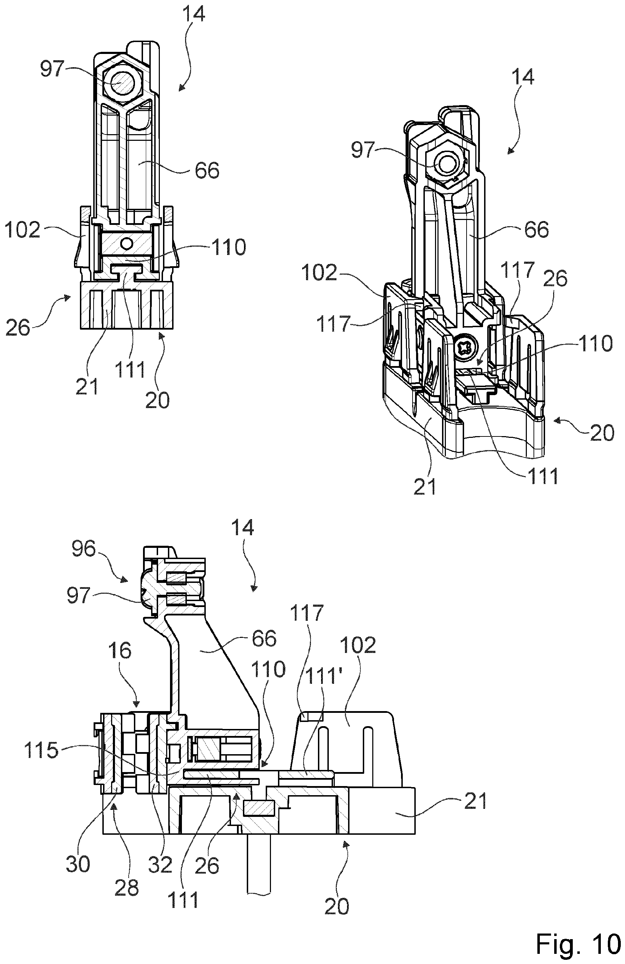

Die Objektmuffenvorrichtung 12 weist eine Schieneneinheit 26 auf, mittels welcher die Zugentlastungseinheit 14 und die Basiseinheit 20 in zumindest einem Montagezustand beweglich miteinander verbunden sind. In Figur 10 sind drei unterschiedliche Ansichten der Zugentlastungseinheit 14 angeordnet auf der Basiseinheit 20, und zwar dem ersten Basiselement 21 zur Verdeutlichung einer Ausgestaltung der Schieneneinheit 26 dargestellt. Die Schieneneinheit 26 ist zumindest teilweise einstückig mit der Basiseinheit 20 und/oder der Zugentlastungseinheit 14 ausgebildet. Vorliegend umfassen sowohl die Basiseinheit 20 als auch die Zugentlastungseinheit 14 zumindest ein Element, welches Teil der Schieneneinheit 26 und zur Bereitstellung der beweglichen Verbindung zwischen der Basiseinheit 20 und der Zugentlastungseinheit 14 vorgesehen ist. Die Zugentlastungseinheit 14 weist eine Führungsnut 110 auf. Die Basiseinheit 20 weist einen zu der Führungsnut 110 korrespondierenden Führungssteg 111 auf. Vorliegend weist das erste Basiselement 21 den Führungssteg 111 auf. Vorliegend ist die Schieneneinheit 26 als T-Führung ausgebildet. Der Führungssteg 111 ist entlang der Führungsnut 110 entlanggleitbar. In dem zweiten Montageschritt 202 wird der Führungssteg 111 in den Führungskanal 110 eingeführt.

Die Schieneneinheit 26 weist ein Stoppelement 115 auf (vgl. Figur 10). Das Stoppelement 115 stellt eine Stoppfunktion für zumindest die Zugentlastungseinheit 14 bereit. Vorliegend ist das Stoppelement 115 einstückig, vorteilhaft einteilig, mit dem Grundelement 66 ausgebildet. Die Zugentlastungseinheit 14 ist horizontal auf den Führungssteg 111 verschiebbar. Die Zugentlastungseinheit 14 kann soweit entlang des Führungsstegs 111 auf die Basiseinheit 20 geschoben werden, bis der Führungssteg 111 an dem Stoppelement 115 ansteht (vgl. unteres Bild in Figur 10). Die Objektmuffenvorrichtung 12 weist zumindest ein weiteres Stoppelement 117 auf. Das weitere Stoppelement 117 ist in dieser beispielhaften Ausführung Teil zumindest eines Fixierelements 102 der Objektmuffenvorrichtung 12. Das Fixierelement 102 wird im späteren Verlauf genauer erläutert. Gemäß Figur 10 ist ersichtlich, dass die Zugentlastungseinheit 14 bis zu dem weiteren Stoppelement 117 auf die Basiseinheit 20 schiebbar ist. In der vorliegenden Darstellung gemäß Figur 10 stößt die Zugentlastungseinheit 14, und zwar das Grundelement 66 an zumindest dem weiteren Stoppelement 117 an.

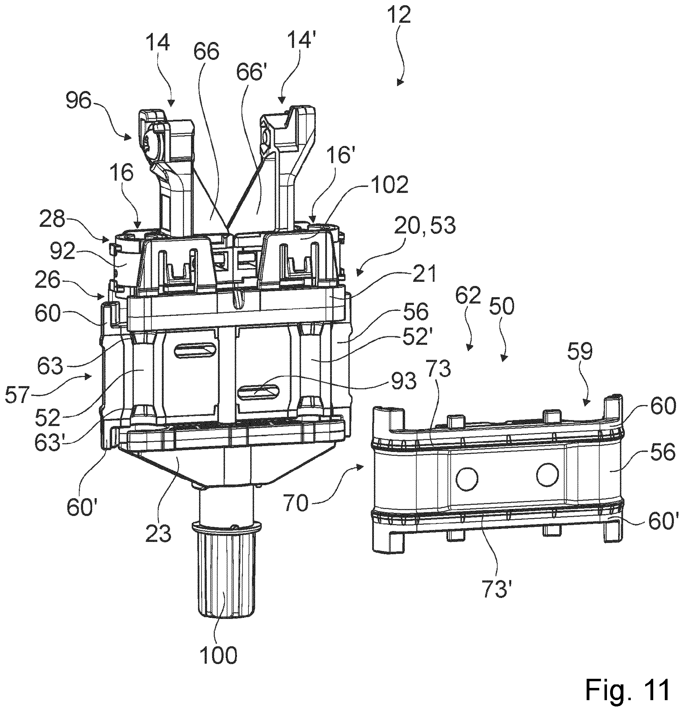

Figur 10 zeigt, dass die Basiseinheit 20 bezüglich zumindest des ersten Basiselements 21 zumindest im Wesentlichen spiegelsymmetrisch aufgebaut ist. Die in dieser beispielhaften Ausführung identisch zu der Zugentlastungseinheit 14 ausgebildete weitere Zugentlastungseinheit 14' wird in dem zweiten Montageschritt 202 auf die Basiseinheit 20 geschoben. Figur 10 zeigt, dass die Basiseinheit 20 einen weiteren Führungssteg 111' aufweist, welcher identisch zu dem Führungssteg 111 ausgebildet ist. Die weitere Zugentlastungseinheit 14' ist auf den weiteren Führungssteg 111' draufschiebbar. Figur 11 zeigt den montierten Zustand nach dem zweiten Montageschritt 202, in welchem die Zugentlastungseinheit 14 und die weitere Zugentlastungseinheit 14' auf der Basiseinheit 20, und zwar dem ersten Basiselement 21 angeordnet sind. In dem zweiten Montageschritt 202 können die Zugentlastungseinheit 14 und die weitere Zugentlastungseinheit 14' entlang einer Montagerichtung 78 (vgl. Figur 4) jeweils soweit auf die Basiseinheit 20 geschoben werden, bis diese sich zumindest teilweise berühren. In dieser beispielhaften Darstellung gemäß Figur 11 sind die Zugentlastungseinheit 14 und die weitere Zugentlastungseinheit 14' derart auf der Basiseinheit 20 angeordnet, dass diese sich kontaktieren. Vorliegend berühren sich jeweils die Grundelemente 66, 66' der Zugentlastungseinheit 14 und der weiteren Zugentlastungseinheit 14'.

Die Objektmuffenvorrichtung 12 weist eine Dichteinheit 50 zur Abdichtung zumindest eines Bereichs um das längliche Objekt 18 auf. Die Dichteinheit 50 weist eine Objektdurchführung 52 auf (vgl. Figur 11). Die Objektdurchführung 52 ist vorliegend als Kabeldurchführung ausgebildet. Vorliegend weist die Dichteinheit 50 zumindest eine weitere Objektdurchführung 52' auf. Die Objektdurchführungen 52, 52' sind beabstandet zueinander angeordnet. Hierbei sind in dem montierten Zustand der Zugentlastungseinheit 14 auf der Basiseinheit 20 ein Zentrum der Objektdurchführung 52 und ein Zentrum des Fixierbereichs 16 zumindest im Wesentlichen fluchtend zueinander angeordnet. Ferner sind in dem montierten Zustand der Zugentlastungseinheit 14' auf der Basiseinheit 20 ein Zentrum der weiteren Objektdurchführung 52' und ein Zentrum eines Fixierbereichs 16' der weiteren Zugentlastungseinheit 14' zumindest im Wesentlichen fluchtend zueinander angeordnet (vgl. Figur 11). Alternativ kann die Dichteinheit 50 eine beliebige Anzahl weiterer Objektdurchführungen aufweisen. Die Objektdurchführungen 52, 52' sind zueinander identisch ausgebildet, weshalb im Folgenden lediglich die Objektdurchführung 52 weiter beschrieben wird. Die Dichteinheit 50 ist dazu vorgesehen, in einem angeordneten Zustand des länglichen Objekts 18 in der Objektdurchführung 52 den Bereich um das längliche Objekt 18, und zwar einen Bereich zwischen dem länglichen Objekt 18 und einer Objektdurchführungswand der Objektdurchführung 52 abzudichten.

Die Basiseinheit 20 ist vorliegend zumindest teilweise von einer Trägereinheit 53 gebildet, welche zur Nutzermontage mit der Dichteinheit 50 verbindbar ist. Vorliegend ist das erste Basiselement 21 und das zweite Basiselement 23 Teil der Trägereinheit 53. Vorliegend gemäß zumindest den Figuren 4, 11 und 12 sind das erste Basiselement 21 und das zweite Basiselement 23 gegenüberliegend zueinander angeordnet. Bei der Nutzermontage ist die Dichteinheit 50 zwischen der ersten Basiseinheit 21 und der zweiten Basiseinheit 23 anordenbar. Bei dem Verfahren zur Montage der Objektmuffenvorrichtung 12 wird die Dichteinheit 50 mit der Trägereinheit 53 in einem dritten Montageschritt 204 verbunden. Vorliegend erfolgt der dritte Montageschritt 204 hinsichtlich des zeitlichen Verlaufs gemäß Figur 15 nach dem zweiten Montageschritt 202.

Die Dichteinheit 50 weist zumindest ein Dichtelement 56 und zumindest ein Schalungselement 60 auf, welche über ein Spritzverfahren stoffschlüssig miteinander verbunden sind. Vorliegend sind das Dichtelement 56 und das Schalungselement 60 mittels eines Mehrkomponenten Spritzgussverfahrens miteinander verbunden. Das Dichtelement 56 ist zumindest teilweise und in dieser beispielhaften Ausführung vollständig aus einem Gel-Element ausgebildet. Zumindest das Dichtelement 56 trägt als Teil der Dichteinheit 50 zur Abdichtung zumindest des Bereichs um das längliche Objekt 18 angeordnet innerhalb der Objektdurchführung 52 bei. Gemäß Figur 11 weist das Dichtelement 56 Freistellungen 93 auf. Vorliegend sind zwei Freistellungen 93 dargestellt. Bei den Freistellungen 93 handelt es sich um Vertiefungen, welche vorliegend als längliche Vertiefungen in dem Dichtelement 56 dargestellt sind. Die Freistellungen 93 sind identisch zueinander ausgebildet, sodass lediglich eine Freistellung mit einem Bezugszeichen versehen ist. Vorliegend dienen die Freistellungen 93 bei einem Zusammendrücken des Dichtelements 56 zu einer gleichmäßigen Komprimierung des Dichtelements 56. Das Schalungselement 60 ist dazu vorgesehen, das Dichtelement 56 in zumindest einer Richtung nach außen hin zumindest teilweise zu begrenzen. Vorliegend umfasst die Dichteinheit 50 ein oberes Schalungselement 60 und ein unteres Schalungselement 60', welche auf sich gegenüberliegenden Seiten an dem Dichtelement 56 angeordnet sind. Das Schalungselement 60 und das weitere Schalungselement 60' sind identisch zueinander ausgebildet, sodass im Folgenden lediglich das Schalungselement 60 weiter beschrieben wird.

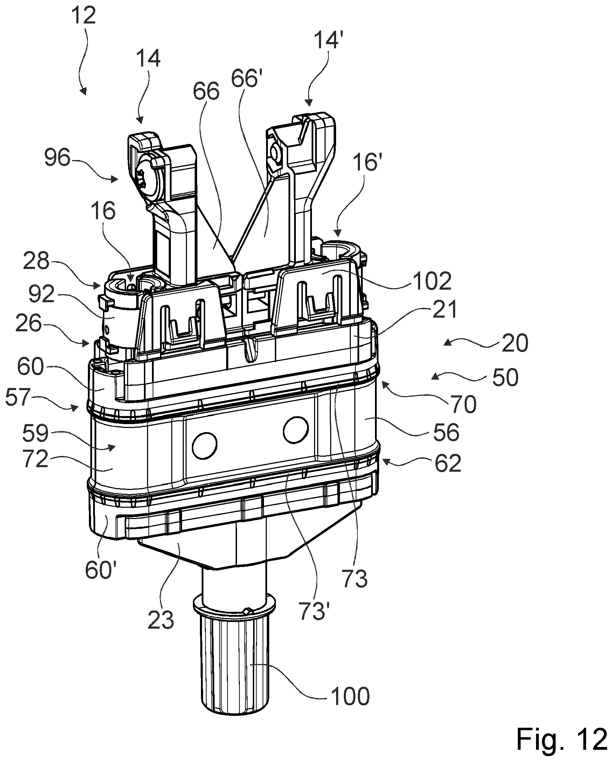

Die Dichteinheit 50 umfasst ein erstes Modulelement 57 und ein zweites Modulelement 59. Das erste Modulelement 57 und das zweite Modulelement 59 weisen jeweils Teile des Dichtelements 56 und des Schalungselements 60 auf. Vorliegend sind das erste Modulelement 57 und das zweite Modulelement 59 identisch zueinander ausgebildet. Das erste Modulelement 57 und das zweite Modulelement 59 sind lösbar miteinander verbindbar. Das erste Modulelement 57 und das zweite Modulelement 59 sind jeweils zumindest teilweise zwischen den Basiselementen 21, 23 anordenbar. In dem dritten Montageschritt 204 beim Verfahren zur Montage der Objektmuffenvorrichtung 12 werden das erste Modulelement 57 und das zweite Modulelement 59 in die Basiseinheit 20 eingesetzt, und zwar zwischen die Basiselemente 21, 23. Figur 11 zeigt beispielhaft einen eingesetzten Zustand des ersten Modulelements 57. Figur 12 hingehen zeigt die Dichteinheit 50 in einem vollständig montierten Zustand an der Trägereinheit 53.

Um eine Abdichtung zu verbessern, weist die Dichteinheit 50 zumindest eine das Dichtelement 56 umgreifende Begrenzungseinheit 62 auf. Die Begrenzungseinheit 62 ist an zumindest dem Schalungselement 60 angeordnet. Die Begrenzungseinheit 62 könnte eine entlang zumindest des Schalungselements 60 umlaufende das Dichtelement 56 begrenzende Einheit sein. Vorliegend ist die Begrenzungseinheit 62 eine im Bereich zumindest der Objektdurchführung 52 angeordnete das Dichtelement 56 begrenzende Einheit. Die Begrenzungseinheit 62 weist segmentartige Begrenzungselemente 63 auf. Die Begrenzungselemente 63 sind als sogenannte Fiederungen ausgebildet. Figur 11 verdeutlicht die Anordnung der segmentartigen Begrenzungselemente 63 in der Objektdurchführung 52. In dieser beispielhaften Ausführung ist die Begrenzungseinheit 62, und zwar die Begrenzungselemente 63, zumindest teilweise und vorliegend vollständig einteilig mit dem Schalungselement 60 ausgebildet.

Die Begrenzungseinheit 62 ist in einem Abdichtungsvorgang zumindest teilweise elastisch verformbar. Die Begrenzungselemente 63 sind zumindest teilweise elastisch verformbar. Der Abdichtungsvorgang ist vorliegend Teil des vierten Montageschritts 206. Bevor auf den vierten Montageschritt 206 im Detail eingegangen wird, soll vorliegend die Dichteinheit 50 weiter beschrieben werden.

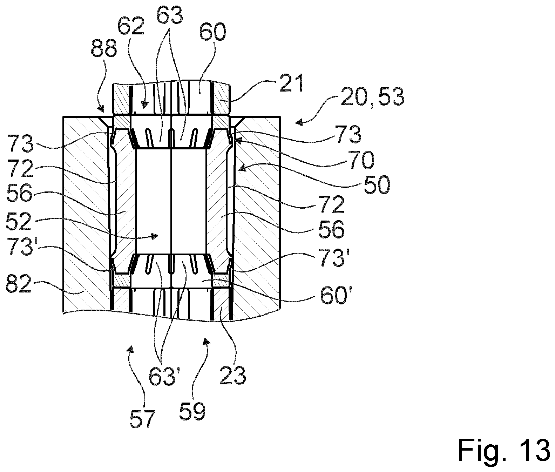

Die Dichteinheit 50 weist zumindest eine Außenbegrenzungseinheit 70 auf, welche das Dichtelement 56 an einer einem Objektkanal, vorliegend einem Kabelkanal, abgewandten Außenwandfläche 72 übergreift (vgl. Figuren 12 und 13). Vorliegend handelt es sich bei dem Objektkanal um die Objektdurchführung 52. Das Dichtelement 56 weist die Außenwandfläche 72 auf (vgl. Figuren 12 und 13). Die Außenbegrenzungseinheit 70 ist Teil der Begrenzungseinheit 62. Die Außenbegrenzungseinheit 70 weist Außenbegrenzungselemente 73 auf. Vorliegend sind die Außenbegrenzungselemente 73 segmentartig ausgebildet. Die Außenbegrenzungselemente 73 sind ebenfalls als sogenannte Fiederungen ausgebildet. In dieser beispielhaften Ausgestaltung sind die Außenbegrenzungselemente 73 zumindest teilweise elastisch verformbar. Hierbei sind die Außenbegrenzungselemente 73 und die Begrenzungselemente 63 zumindest im Wesentlichen zueinander identisch ausgebildet. Die Außenbegrenzungseinheit 70 ist an zumindest dem Schalungselement 60 angeordnet. Die Außenbegrenzungseinheit 70 ist eine entlang zumindest des Schalungselements 60 umlaufende das Dichtelement 56 an der Außenwandfläche 72 begrenzende Einheit (vgl. Figur 12).

Zur Verdeutlichung einer Funktionsweise und einer Anordnung der Begrenzungseinheit 62 und der Außenbegrenzungseinheit 70 ist in Figur 13 ein Ausschnitt eines montierten Zustands der Objektmuffenvorrichtung 12 in dem Dichtblock 82 der Objektmuffe 10 gezeigt. Mittels dieser Schnittdarstellung ist erkennbar, dass die Außenbegrenzungseinheit 70 an der Außenwandfläche 72 des Dichtelements 56 anliegt und bei Komprimierung des Dichtelements 56 ein Heraustreten des Dichtelements 56 aus zumindest der Gehäuseeinheit 80 verhindert.

In einem abgedichteten Zustand des länglichen Objekts 18 ist die Dichtelement 56 verformt, und zwar komprimiert. Durch die Verformung des Dichtelements 56 dichtet das Dichtelement 56 zumindest das länglichen Objekt 18 innerhalb der Kabeldurchführung 52 ab. Die Objektmuffenvorrichtung 12 weist ein Bedienelement 100 auf. Das Bedienelement 100 ist als ein Drehknopf ausgebildet. Alternativ könnte das Bedienelement 100 als ein Druckknopf und/oder ein Hebel ausgebildet sein. Vorliegend weist das Bedienelement 100 eine Überdrehsicherung auf (nicht dargestellt). Die Schnittdarstellung gemäß Figur 14 verdeutlicht, dass zwischen dem Bedienelement 100 und dem zweiten Basiselement 23 eine Feder 119 angeordnet ist. Die Schalungselemente 60, 60' üben in dem montierten Zustand einen Druck auf das Dichtelement 56 aus. Der Druck verhindert eine Rückformung des Dichtelements 56. Das Bedienelement 100 dient einer Einstellung dieses Drucks und einer Komprimierung des Dichtelements 56. Bei einer Betätigung des Bedienelements 100 wird die Feder 119 zusammengedrückt. In dem vierten Montageschritt 206, welcher auch als ein Abdichtungsschritt bezeichenbar ist, wird durch Drehen des Bedienelements 100 das Dichtelement 56 verformt und eine Abdichtung für zumindest das längliche Objekt 18 bereitgestellt.

Hinsichtlich des zeitlichen Verlaufs erfolgt nach dem vierten Montageschritt 206 der fünfte Montageschritt 208. In dem fünften Montageschritt 208 wird die Objektmuffenvorrichtung 12 in die Gehäuseeinheit 80 eingesetzt. Zu einer Fixierung mit der Gehäuseeinheit 80 weist die Objektmuffenvorrichtung 12 zumindest das Fixierelement 102 auf. In dieser beispielhaften Ausführung weist die Objektmuffenvorrichtung 12 vier identisch zueinander ausgebildete Fixierelemente 102 auf, weshalb lediglich eins der Fixierelemente mit einem Bezugszeichen versehen ist (vgl. zumindest Figuren 4, 11, und 12). Zumindest das Fixierelement 102 dient zu zumindest einer Rastverbindung mit der Gehäuseeinheit 80. Figur 1 zeigt die Objektmuffenvorrichtung 12 fixiert in der Gehäuseeinheit 80.

### Bezugszeichen

- 10: Objektmuffe
- 12: Objektmuffenvorrichtung
- 14: Zugentlastungseinheit
- 16: Fixierbereich
- 18: Längliche Objekt
- 19: Leiter
- 20: Basiseinheit
- 21: Basiselement
- 23: Basiselement
- 26: Schieneneinheit
- 28: Backeneinheit
- 30: Backenelement
- 32: Backenelement
- 35: Einhängeelement
- 36: Formschlusselement
- 38: Formschlusselement
- 50: Dichteinheit
- 52: Objektdurchführung
- 53: Trägereinheit
- 56: Dichtelement
- 57: Modulelement
- 59: Modulelement
- 60: Schalungselement
- 62: Begrenzungseinheit
- 63: Begrenzungselement
- 66: Grundelement
- 68: Öffnung
- 70: Außenbegrenzungseinheit
- 72: Außenwandfläche
- 73: Außenbegrenzungselement
- 78: Montagerichtung
- 80: Gehäuseeinheit
- 82: Dichtblock
- 84: Einführrichtung
- 86: Objektaufnahme
- 88: Loopaufnahme
- 90: Rippe
- 92: Spannband
- 93: Freistellung
- 95: Vernietung
- 96: Fixierbereich
- 97: Klemmelement
- 98: Einstelleinheit
- 99: Einstellrichtung
- 100: Bedienelement
- 102: Fixierelement
- 110: Führungsnut
- 111: Führungssteg
- 115: Stoppelement
- 116: Zentralstützelement
- 117: Stoppelement
- 118: Abdeckelement
- 119: Feder
- 120: Vertiefung
- 200: Montageschritt
- 202: Montageschritt
- 204: Montageschritt
- 206: Montageschritt
- 208: Montageschritt

## Patentansprüche

1. Objektmuffenvorrichtung (12) mit zumindest einer Zugentlastungseinheit (14), insbesondere zumindest einer Loop-Zugentlastungseinheit, welche zumindest einen Fixierbereich (16) für zumindest ein längliches Objekt (18), insbesondere ein Kabel, aufweist, und mit zumindest einer Basiseinheit (20), **dadurch gekennzeichnet, dass** zu einer Vormontage des länglichen Objekts (18) mit der Zugentlastungseinheit (14), die Zugentlastungseinheit (14) und die Basiseinheit (20) zumindest teilweise trennbar voneinander ausgebildet sind.

2. Objektmuffenvorrichtung (12) nach Anspruch 1, **dadurch gekennzeichnet, dass** die Zugentlastungseinheit (14) und die Basiseinheit (20) vollständig voneinander trennbar ausgebildet sind.

3. Objektmuffenvorrichtung (12) nach Anspruch 1 oder 2, **gekennzeichnet durch** eine Schieneneinheit (26), mittels welcher die Zugentlastungseinheit (14) und die Basiseinheit (20) in zumindest einem Montagezustand beweglich miteinander verbunden sind.

4. Objektmuffenvorrichtung (12) nach Anspruch 3, **dadurch gekennzeichnet, dass** die Schieneneinheit (26) zumindest teilweise einstückig mit der Basiseinheit (20) und/oder der Zugentlastungseinheit (14) ausgebildet ist.

5. Objektmuffenvorrichtung (12) nach einem der vorhergehenden Ansprüche, **dadurch gekennzeichnet, dass** die Zugentlastungseinheit (14) zumindest eine Backeneinheit (28) aufweist, welche zu einer direkten Kopplung mit dem länglichen Objekt (18) vorgesehen ist.

6. Objektmuffenvorrichtung (12) nach Anspruch 5, **dadurch gekennzeichnet, dass** die Backeneinheit (28) zumindest zwei korrespondierende Backenelemente (30, 32) aufweist.

7. Objektmuffenvorrichtung (12) nach Anspruch 6, **dadurch gekennzeichnet, dass** die Backenelemente (30, 32) jeweils zumindest ein Formschlusselement (36, 38) aufweisen, welche dazu vorgesehen sind, bei einer Montage zur Führung der Backenelemente (30, 32) korrespondierend ineinanderzugreifen.

8. Objektmuffenvorrichtung (12) nach einem der vorhergehenden Ansprüche, **gekennzeichnet durch** eine Dichteinheit (50) zur Abdichtung zumindest eines Bereichs um das längliche Objekt (18), wobei die Basiseinheit (20) zumindest teilweise von einer Trägereinheit (53) gebildet ist, welche zur Nutzermontage mit der Dichteinheit (50) verbindbar ist.

9. Objektmuffenvorrichtung (12) nach Anspruch 8, **dadurch gekennzeichnet, dass** die Dichteinheit (50) zumindest ein Dichtelement (56) und zumindest ein Schalungselement (60) aufweist, welche über ein Spritzverfahren stoffschlüssig miteinander verbunden sind.

10. Objektmuffenvorrichtung (12) nach Anspruch 9, **dadurch gekennzeichnet, dass** das Dichtelement (56) zumindest teilweise aus einem Gel-Element ausgebildet ist.

11. Objektmuffenvorrichtung (12) nach Anspruch 9 oder 10, **dadurch gekennzeichnet, dass** die Dichteinheit (50) zumindest eine das Dichtelement (56) umgreifende Begrenzungseinheit (62) aufweist.

12. Objektmuffenvorrichtung (12) nach Anspruch 11, **dadurch gekennzeichnet, dass** die Begrenzungseinheit (62), insbesondere die Begrenzungselemente (63), in einem Abdichtungsvorgang zumindest teilweise elastisch verformbar ist.

13. Objektmuffenvorrichtung (12) nach einem der Ansprüche 8 bis 12, **dadurch gekennzeichnet, dass** die Dichteinheit (50) zumindest eine Außenbegrenzungseinheit (70) aufweist, welche das Dichtelement (56) an einer einem Objektkanal, insbesondere Kabelkanal, abgewandten Außenwandfläche (72) übergreift.

14. Objektmuffe (10) mit zumindest einer Objektmuffenvorrichtung (12) nach einem der vorhergehenden Ansprüche.

15. Verfahren zur Montage einer Objektmuffenvorrichtung (12) nach einem der Ansprüche 1 bis 13.
